(19) Europäisches Patentamt
European Patent Office
Office européen des brevets

(11) EP 3 916 902 B1

(12) EUROPEAN PATENT SPECIFICATION

(45) Date of publication and mention of the grant of the patent:
**08.07.2026 Bulletin 2026/28**

(21) Application number: **21176469.1**

(22) Date of filing: **28.05.2021**

(51) International Patent Classification (IPC):
***H01M 50/489*** *(2021.01)* ***H01M 10/052*** *(2010.01)*
***H01M 50/403*** *(2021.01)* ***H01M 50/417*** *(2021.01)*
***H01M 50/491*** *(2021.01)*

(52) Cooperative Patent Classification (CPC):
**H01M 50/403; H01M 50/417; H01M 50/489; H01M 50/491;** Y02E 60/10

(54) **SEPARATOR FOR POWER STORAGE DEVICE, AND METHOD FOR PRODUCING THE SAME**

SEPARATOR FÜR ENERGIESPEICHERVORRICHTUNG UND VERFAHREN ZUR HERSTELLUNG DAVON

SÉPARATEUR POUR DISPOSITIF DE STOCKAGE D’ÉNERGIE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2020 JP 2020093533**
**24.05.2021 JP 2021087186**

(43) Date of publication of application:
**01.12.2021 Bulletin 2021/48**

(73) Proprietor: **Asahi Kasei Battery Separator Corporation**
**Tokyo 100-0006 (JP)**

(72) Inventor: **Zhang, Xun**
**Tokyo (CN)**

(74) Representative: **dompatent**
**Partnerschaft von**
**Patentanwälten und Rechtsanwälten mbB**
**Deichmannhaus am Dom**
**Bahnhofsvorplatz 1**
**50667 Köln (DE)**

(56) References cited:
**EP-A1- 3 113 245** **US-B1- 6 235 432**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

FIELD

The present disclosure relates to a separator for a power storage device, and a method for producing the same.

BACKGROUND

Polyolefin microporous membranes exhibit excellent insulation properties or ion permeability, and thus are used for separators for power storage devices, for example, separators for batteries or separators for capacitors. In recent years, polyolefin microporous membranes have been used, in particular, for separators for lithium ion secondary batteries, and have been tried to be applied to not only microelectronics such as mobile phones and laptop computers, but also electric vehicles such as electric cars and mini electric motorcycles.

PTL 1 describes a separator for a secondary battery, the separator including a heat-resistant inorganic layer formed on at least one of a first surface or a second surface of a porous polymer sheet, and internal surfaces of pores formed by an atomic layer deposition method (ALD). PTL 2 describes a 2-part adhesive formulation comprising, in a first part, water, a surfactant, and a protected alkylborane complex and, in a second part, an acrylic monomer and a trialkylborane-displacing initiator, in which the formulation can be applied to a low surface energy substrate to make effective adhesion without the aid of any surface pretreatment. PTL 3 aims at lithium ion cells with improved cycle stability and describes modified porous polyolefin separators, produced by contacting a porous polyolefin membrane with molecular oxygen, followed by contacting the treated membrane with an aqueous solution comprising at least one monomer containing at least one carbon-carbon double bond, and at least one decomplexing agent.

Non Patent Literature 1 describes a separator of a polypropylene (PP) resin, in which the separator can be improved in wettability by modification with polyethylene oxide (PEO) according to hyperthermal hydrogen induced crosslinking (HHIC). Non Patent Literatures 2 and 3 each relates to modification of a polypropylene (PP) resin, and describes a technique for modification of PP with borane, since tertiary carbon of PP easily generates a radical.

[CITATION LIST]

[PATENT LITERATURE]

[PTL 1] Japanese Unexamined Patent Publication No. 2017-84779

[PTL 2] Japanese Translation of PCT International Application Publication No. 2007-523248

[PTL 3] EP 3 113 245 A1


[NON PATENT LITERATURE]

[NPL 1] Changzhen Man, et.al., "Enhanced wetting properties of a polypropylene separator for a lithium-ion battery by hyperthermal hydrogen induced cross-linking of poly(ethylene oxide)", J. Mater. Chem. A, 2014, 2, pp.11980-11986.

[NPL 2] Mark F. Sonnenschein, et.al., "Physical and Chemical Probes of the Bond Strength between Trialkylboranes and Amines and Their Utility as Stabilized Free Radical Polymerization Catalysts", Macromolecules, 2006, 39, pp.2507-2513.

[NPL 3] Mark F. Sonnenschein, et.al., "Mechanism of Trialkylborane Promoted Adhesion to Low Surface Energy Plastics", Macromolecules, 2004, 37, pp.7974-7978.

[NPL 4] Vincent J. McBrierty, "NMR Solid Polymers (Cambridge Solid State Science Series)", Cambridge University Press, Illustrated version, August 21, 2008

[NPL 5] P.J. Hore, et.al., "Introduction to NMR: Essential Tool Primer (Chemistry Primer Series)", Kagaku Dojin, March 22, 2017

[NPL 6] Hideo AKUTSU, Ichio SHIMADA, Eiichiro SUZUKI, and Yoshifumi Nishimura, "NMR Spectroscopy (Spectroscopy Series)", Kodansha Ltd., April 23, 2016


SUMMARY

[TECHNICAL PROBLEM]

An object of the present disclosure is to provide a separator for a power storage device, which can provide a power storage device excellent in cycle stability, and a method for producing the separator.

[SOLUTION TO PROBLEM]

The present inventors have made intensive studies in order to solve the above problem, and as a result, have found that the problem can be solved by a microporous membrane (also simply referred to as "polyethylene microporous membrane") having specified thickness, strength per weight, air permeability and porosity, and including polyethylene as a main component, in which the proportion of signal intensity is in a specified range in observation of spin-spin relaxation time of all protons in pulse NMR measurement with a solid echo method or CPMG method.

The invention is defined by the independent claims. The dependent claims describe preferred embodiments.

[ADVANTAGEOUS OF EFFECTS OF INVENTION]

According to the present disclosure, a separator for a power storage device, which can provide a power storage device excellent in cycle stability, and a method for producing the separator, can be provided. The above description is not to be considered to disclose all embodiments and all advantages. Additional embodiments and advantages thereof will be apparent with reference to the following description and drawings.

BRIEF DESCRIPTION OF DRAWINGS

FIG. 1 is a schematic view of a microporous membrane according to the present disclosure, which is grafted by one hetero atom-containing functional group that undergoes a self-condensation reaction;
FIG. 2 is a schematic view of a microporous membrane according to the present disclosure, which is grafted by two hetero atom-containing functional groups that undergo a condensation reaction;
FIG. 3 is a schematic view of a microporous membrane according to the present disclosure, which is grafted by a hetero atom-containing functional group that forms a chelate complex structure;
FIG. 4 is a schematic view of a microporous membrane according to the present disclosure, which is grafted by a hetero atom-containing functional group that forms a bond with a material in an electrode;
FIG. 5 is a schematic view of a microporous membrane according to the present disclosure, which is grafted by a hetero atom-containing functional group having a stable structure in stable oxidation or reduction at one or more stages;
FIG. 6(a) illustrates observation results of pulse NMR with a CPMG method, of a microporous membrane of Example 1. FIG. 6(b) illustrates observation results of pulse NMR with a solid echo method, of the microporous membrane of Example 1;
FIG. 7(a) illustrates observation results of pulse NMR with a CPMG method, of a microporous membrane of Example 2. FIG. 7(b) illustrates observation results of pulse NMR with a solid echo method, of the microporous membrane of Example 2;
FIG. 8(a) illustrates observation results of pulse NMR with a CPMG method, of a microporous membrane of Example 3. FIG. 8(b) illustrates observation results of pulse NMR with a solid echo method, of the microporous membrane of Example 3; and
FIG. 9(a) illustrates observation results of pulse NMR with a CPMG method, of a microporous membrane of Example 4. FIG. 9(b) illustrates observation results of pulse NMR with a solid echo method, of the microporous membrane of Example 4.

DESCRIPTION OF EMBODIMENTS

Hereinafter, embodiments of the present disclosure will be described for illustrative purposes, but the present disclosure is not limited to such embodiments. An upper limit value and a lower limit value in each numerical value range herein can be arbitrarily combined.

<<Separator for power storage device>>

<Graft structure>

The separator for a power storage device of the present disclosure includes a microporous membrane including polyethylene as a main component. The polyethylene present in the microporous membrane is grafted by one or more hetero atom-containing functional groups. The "grafted" refers to a structure where such a hetero atom-containing functional group is bound, as a pendant group, to a molecular chain of the polyethylene. The polyethylene is grafted by such hetero atom-containing functional group(s), thereby providing a microporous membrane having various properties such as thermal stability, electric properties, and adhesiveness with an electrode.

A hetero atom is any atom other than carbon and hydrogen atoms. Examples of the hetero atom preferably include typical non-metal atoms such as a halogen atom, an oxygen atom, a sulfur atom, a nitrogen atom, a phosphorus atom, and a silicon atom. Examples of the halogen atom include a fluorine atom, a chlorine atom, a bromine atom, and an iodine atom. A polymer higher-order structure in a separator including polyethylene as a main component is low in electrostatic polarity, and is low in affinity with an electrolytic solution having high intramolecular polarity. It has found that providing a hetero atom-containing functional group in an appropriate polymer higher-order structure tends to result in a polymer higher-order structure which has a partial polarity structure, and is easily swollen and retained with an electrolytic solution. Thus, even if a separator is compressed and deformed, it is swollen with an electrolytic solution and has favorable volume recovery in the compression direction, thereby the separator can retain a structure uniform in pore size over a long period. This enables uniform Li ion conduction, leading to suppression of dendrite growth, and enables securement of safety of a battery.

Examples of such a hetero atom-containing functional group preferably include one kind of hetero atom-containing functional group that undergoes a self-condensation reaction; a combination of two or more kinds of different hetero atom-containing functional groups that undergo a condensation reaction; one or more kinds of hetero atom-containing functional groups that form a chelate complex structure via a metal ion; one or more kinds of hetero atom-containing functional groups that form any bond selected from a coordinate bond, an ionic bond, a hydrogen bond and a covalent bond with a compound included in other member in a power storage device, the member being in contact with the surface of the microporous membrane; and one or more kinds of hetero atom-containing functional groups having a stable structure in stable oxidation or reduction at one or more stages.

The hetero atom-containing functional group (also referred to as "self-condensation type functional group") that undergoes a self-condensation reaction refers to any functional group where the same kind of such functional groups can be reacted and a part of them can be eliminated and the other part can form a new bond. A crosslinked structure is preferably formed between polyethylene molecular chains by a self-condensation reaction. A crosslinked structure is formed between polyethylene molecular chains, resulting in an increase in melt viscosity of the microporous membrane and an enhancement in safety upon heat generation of a battery. Such a crosslinked structure may be formed between polyethylene molecular chains present in the interior or on the surface of the same microporous membrane.

The self-condensation may spontaneously occur under an environment in a power storage device, or may be generated by any external stimulus. Examples of such external stimulus include heat and light such as ultraviolet light.

Examples of the self-condensation type functional group include a functional group having both properties of an electrophilic agent and properties of a nucleophilic agent, for example, a carbonyl group having a hydrogen atom at the $\alpha$-position, such as an acetyl group and an aldehyde group; and an alkoxysilane group. The self-condensation type functional group is preferably an alkoxysilane group, for example, a methoxysilane group and an ethoxysilane group, more preferably a trimethoxysilane group.

FIG. 1 is a schematic view of a PE polymer higher-order structure (10) in a microporous membrane grafted by one hetero atom-containing functional group (20) that undergoes a self-condensation reaction, according to the present disclosure. In FIG. 1, a polyethylene molecular chain present in the microporous membrane is grafted by a functional group having a trimethoxysilane group ($-Si(OMe)_3$). The trimethoxysilane group undergoes a dehydration condensation reaction by heating as external stimulus, and thus forms a crosslinked structure (30) between such polyethylene molecular chains. In FIG. 1, n and m are each an integer of 0 to 3, and n + m equals to 3. As illustrated in FIG. 1, a trimethoxysilane group subjected to graft modification into the PE polymer higher-order structure in the microporous membrane may form a crosslinked structure by any stimulus of an electrolyte and/or electrolytic solution in a battery. A crosslinked structure may also be formed between polyethylene molecular chains present in the interior or on the surface of the same microporous membrane, although not illustrated.

A combination of two or more kinds of different hetero atom-containing functional groups (each also referred to as "condensation type functional group") that undergo a condensation reaction refers to two or more kinds of different functional groups that can react therebetween to thereby allow a part of them to be eliminated and the other part to form a new bond. A crosslinked structure is preferably formed between polyethylene molecular chains by a self-condensation reaction. A crosslinked structure is formed between polyethylene molecular chains, resulting in an increase in melt viscosity of the microporous membrane and an enhancement in safety upon heat generation of a battery.

The self-condensation may spontaneously occur under an environment in a power storage device, or may be

generated by any external stimulus. Examples of such external stimulus include heat and light such as ultraviolet light.

Examples of the combination of the condensation type functional groups include a combination of a functional group having properties of an electrophilic agent with a functional group having properties of a nucleophilic agent. Examples of the functional group having properties of an electrophilic agent include a carbonyl group, for example, a carboxy group, ester group, ketone group, and aldehyde group. Examples of the functional group having properties of the nucleophilic agent include a hydroxyl group, alkoxy group, and amine group. Such a combination of the condensation type functional groups is preferably a combination of an alkoxy group or hydroxyl group with a carboxy group or ester group, more preferably a combination of a hydroxyl group with an ester group, further preferably a combination of a hydroxyl group with a methyl ester group.

FIG. 2 is a schematic view of a PE polymer higher-order structure (10) in a microporous membrane according to the present disclosure, which is grafted by two hetero atom-containing functional groups (20) that undergo a condensation reaction. In FIG. 2, a polyethylene molecular chain present in the microporous membrane is grafted by a carboxy group-containing functional group and a methyl ester group-containing functional group. The carboxy group-containing functional group and the methyl ester group-containing functional group undergo a condensation reaction by elimination of methanol by heating as external stimulus, and thus form a crosslinked structure (30) between such polyethylene molecular chains.

A hetero atom-containing functional group (also referred to as "chelate complex-forming functional group") that forms a chelate complex structure via a metal ion is, namely, a functional group that can be coordinated to a metal ion. Such a chelate complex structure can be preferably formed, since a metal ion generated in a power storage element is trapped to result in an enhancement in cycle characteristics of the power storage element.

Singly or a plurality of chelate complex-forming functional groups can be together coordinated to one metal ion, depending on the number of coordination positions in a metal ion of the chelate complex-forming functional group. In a case where a plurality of chelate complex-forming functional groups are together coordinated to one metal ion, such a plurality of chelate complex-forming functional groups may be present in the same microporous membrane.

Examples of such a metal ion include a metal ion having one or a plurality of coordination positions ($M^{n+}$, n = 1 to 3), for example, a lithium ion ($Li^+$), cobalt ion ($Co^{2+}$, $Co^{3+}$), nickel ion ($Ni^{2+}$), an iron ion ($Fe^{3+}$) and a manganese ion ($Mn^{2+}$). A case where such a metal ion is a lithium ion ($Li^+$) tends to result in a decrease in ionic resistance at the interface of the microporous membrane and enhancement in cycle characteristics and output characteristics of the power storage element.

Examples of the chelate complex-forming functional group include a functional group that can provide an unshared electron pair that can be coordinated to such a metal ion, for example, an amino group, an amine group, an ether group, a hydroxyl group, a carboxyl group, and a thiol group. Examples of the chelate complex-forming functional group preferably include an ether group-containing functional group, more preferably an alkylene glycol group, further preferably a methoxyethylene glycol group.

FIG. 3 is a schematic view of a PE polymer higher-order structure (10) in a microporous membrane according to the present disclosure, which is grafted by a hetero atom-containing functional group (20) that forms a chelate complex structure (40). In the upper drawing in FIG. 3, a polyethylene molecular chain present in the microporous membrane is grafted by a methoxyethylene glycol group-containing functional group (20). In FIG. 3, two ether oxygen atoms of one methoxyethylene glycol group are coordinated to a metal ion ($M^{n+}$) at two positions. Two ether oxygen atoms of other methoxyethylene glycol group present in the same microporous membrane are also coordinated to the same metal ion ($M^{n+}$) at two positions. As illustrated in the lower drawing in FIG. 3, such other methoxyethylene glycol group may form a chelate complex structure (40) so as to form a crosslinked structure by any stimulus of an electrolyte and/or electrolytic solution in a battery. A crosslinked structure may also be formed between polyethylene molecular chains present in the interior or on the surface of the same microporous membrane, although not illustrated.

A hetero atom-containing functional group (also referred to as "bond-forming functional group".) that forms any bond selected from a coordinate bond, an ionic bond, a hydrogen bond and a covalent bond with a compound included in other member in a power storage device, the member being in contact with the surface of the microporous membrane, is preferable because of being capable of enhancing adhesiveness to an electrode and contributing to an enhancement in stability of a power storage element. Such a bond is preferably an ionic bond with a carboxyl group. Examples of such other member in a power storage device which is in contact with the surface of the microporous membrane include a positive electrode and a negative electrode.

Examples of the compound included in the positive electrode include a positive electrode active material, and a binder. Examples of the positive electrode active material include a substance being capable of storing and releasing a metal ion, a carbon material, a metal oxide, a metal sulfide, and a metal nitride. Examples also include a metal oxide, for example, lithium/transition metal oxide.

Examples of the compound included in the negative electrode include a negative electrode active material, and a binder. Examples of the negative electrode active material include a substance being capable of storing and releasing a metal ion, for example, a carbon material, a metal oxide, a metal sulfide, and a metal nitride.

Such a compound to which the bond-forming functional group is bound preferably corresponds to the compound(s) included in the positive electrode and/or negative electrode, more preferably such compound(s) forming a bond to the positive electrode active material and/or negative electrode active material, for example, a metal oxide ($MO_x$), via an ionic bond or with coordination. The bond-forming functional group is preferably, for example, a carboxyl group.

FIG. 4 is a schematic view of a PE polymer higher-order structure (10) in a microporous membrane according to the present disclosure, which is grafted by a hetero atom-containing functional group (20) that is taken with a material in an electrode to thereby form a bond. In FIG. 4, a polyethylene molecular chain present in the microporous membrane is grafted by a methyl ester group-containing functional group. A methyl ester group is changed to a carboxy group by slight hydrofluoric acid (HF) in an electrolytic solution, and the carboxy group is ionically bound (30) to a metal oxide ($MO_x$) (50) in an electrode.

FIG. 5 is a schematic view of a PE polymer higher-order structure (10) in a microporous membrane according to the present disclosure, which is grafted by a hetero atom-containing functional group (20) having a stable structure in stable oxidation or reduction at one or more stages. The hetero atom-containing functional group having a stable structure in stable oxidation or reduction at one or more stages means that the group can be stably present in the form of a structure changed in oxidation number of a compound without any decomposition under an environment of electrochemical oxidation and reduction in a power storage device. In other words, even repetition of electrochemical oxidation and reduction causes no structure decomposition of the hetero atom-containing functional group, and a reproducible and reversible oxidation/reduction wave can be observed in cyclic voltammetry (CV) measurement. Such oxidation/reduction at "one or more stages" means that one or more oxidized and reduced states are present. For example, in the case of a 2,2,6,6-tetramethylpiperidine 1-oxyl (TEMPO) group, there are two oxidized and reduced states of a reduced state having a valence of -1 and an oxidized state having a valence of +1, and thus it corresponds to "two stages" of oxidation/reduction.

Examples of the hetero atom-containing functional group having a stable structure in stable oxidation or reduction at one or more stages preferably include nitronyl nitroxide, 4-nitrophenyl nitronyl nitroxide, phenothiazine, dihydrophenazine, and catechol.

The amount of grafting based on the total molar amount of the polyethylene unit is desirably about 10% by mol or less, more desirably 2% by mol or less, further desirably 1.8% by mol or less. A separator having an excess amount of grafting of more than 10% by mol tends to result in a large change in polymer higher-order structure due to progression of various chemical reactions in a battery. The amount of grafting based on the total molar amount of the polyethylene unit is desirably 0.01% by mol or more, more desirably 0.03% by mol or more, further desirably 0.1% by mol or more. An amount of grafting of 0.01% by mol or more easily allows the effect by influence on the polymer higher-order structure to be obtained. As described below, in a case where the entire of the polymer higher-order structure hardly loosens, swelling due to an electrolytic solution is inhibited. Since a desirable range varies depending on the graft type, and it is preferable that a separator in an electrolytic solution is easily swollen by such an electrolytic solution and has a high volume recovery rate in the compression direction upon release of a compression force due to an internal pressure of a battery, it is more important to adjust moveability of the entire polymer structure of a separator by grafting. A crystalline polymer has a polymer higher-order structure constructed from a crystal component, a non-crystal component and an intermediate component therebetween. Since the crystal component in the higher-order structure is made from a plurality of molecular chains, the crystal component serves as an entanglement point, and also the non-crystal component serves as an entanglement point having a structure in which their molecular chains are entangled with each other. Such a polymer higher-order structure having a complicated entanglement structure can allow immersion swelling due to a low molecule (solvent, plasticizer, electrolytic solution, etc.) to occur. Such a phenomenon is controlled by a thermodynamic behavior in expansion of the entire higher-order structure due to a low molecule. For example, the polymer higher-order structure strongly performs molecular movement in a high temperature region, and thus the entire entanglement easily loosens and a swelling phenomenon easily progresses. In this regard, the present disclosure has focused on the construction of a polymer higher-order structure that is easily swollen by an electrolytic solution in not a high temperature region (region of temperature at which an $\alpha_2$ crystal of polyethylene is relaxed, as determined by viscoelasticity measurement: around 100 to 120°C), but a battery operation temperature region. In a case where a polymer structure of a separator has moveability in a limited range, a separator can be obtained in which an electrolytic solution is easily immersed in a polymer structure and which has a polymer higher-order structure exhibiting a high volume recovery rate even in compression of the separator. Such moveability is quantitatively determined by using a pulse NMR method in the present disclosure. The present inventors have revealed that a separator, which has a more appropriate moveable structure and thus entirely has pore size uniformity and uniformity of an electrolytic solution even in a long-term cycle, thus not only exhibits favorable cycle performance, but also can allow dendrite caused due to the variation in conduction of a Li ion to be suppressed and can allow safety of a battery in long-term use to be ensured.

It is known that moveability of polyethylene in a separator can be quantitatively determined by observation of spin-spin relaxation time of all protons ($T_2$ relaxation time) in the separator. Such moveability of polyethylene is specifically divided to three components, a low moveable component, a high moveable component and an intermediate component therebetween. The present inventors have made experiments repeatedly, and found that a separator having a high volume

recovery rate in compression in an electrolytic solution is obtained by adjusting the proportion of signal intensity at a specified time after the start of observation based on the signal intensity at the start of the observation, within a specified range, by use of a solid echo method and a CPMG (Carr-Purcell-Meiboom-Gill) method (JNM-MU25A pulse NMR apparatus manufactured by JEOL Ltd., see the operational manual (DOS/V Windows version), pages: 2-16 to 17). In general, physical properties such as mechanical strength and heat resistance of a molded article made of polyethylene has been described with reference to a crystal structure configured from a crystal portion and a non-crystal portion of polyethylene. Such properties are determined by a test involving applying an external force to polyethylene to largely deform or break such polyethylene, or by observation of a relaxation phenomenon in heating in a temperature range considerably wider than a temperature range usually used. In other words, there cannot be directly observed any performance of a crystal structure in a state and at a temperature where such a molded article is actually used, and there cannot be accurately analyzed in principle. On the other hand, although X-ray structure analysis can also perform analysis of a molded article made of polyethylene, X-ray structure analysis has a problem of not providing any molecular movement information, instead of being capable of directly observing a crystal structure. On the contrary, the inventors have focused on the following: a pulse NMR method being capable of directly observing moveability of the entire polymer structure can be used to depict thermodynamic energy information of the entire polymer higher-order structure in a phenomenon of volume recovery due to swelling in compression of a separator, generated from interaction between a crystal structure of polyethylene and an electrolytic solution, without any large deformation of the separator; and have experimentally found an appropriate polymer higher-order structure of polyethylene.

In the case of the solid echo method, the proportion of signal intensity at 0.2 msec after the start of the observation is preferably 0.2% to 40%, more preferably 0.5% to 30%, further preferably 2.0% to 25%, based on the signal intensity at the start of the observation. The proportion of signal intensity at 0.8 msec after the start of the observation is preferably 0.05% to 10%, more preferably 0.1% to 8.0%, further preferably 0.2 to 4.0%, based on the signal intensity at the start of the observation. In the case of the CPMG method, the proportion of signal intensity at 40 msec after the start of the observation is preferably 5% to 30%, more preferably 8% to 28%, further preferably 10% to 25%, based on the signal intensity at the start of the observation. The proportion of signal intensity at 140 msec after the start of the observation is preferably 1.5% to 20%, more preferably 2.0% to 18%, further preferably 2.5% to 15%, based on the signal intensity at the start of the observation. Such a procedure can be used to result in determination of an appropriate amount of modification, regardless of the type of chemical species for grafting, for use in modification, from the viewpoint of an enhancement in battery cycle properties. The separator of the present disclosure can allow various chemical reactions (crosslinking reaction, metal complex formation reaction and oxidation/reduction reaction) to occur in a battery, and imparts a slight change in moveability of the entire polymer higher-order structure observed by pulse NMR before and after such a chemical reaction, but satisfies the proportion of signal intensity before and after the chemical reaction in terms of exertion of the effects.

<Polyethylene>

In the present disclosure, the microporous membrane includes polyethylene in an amount of 50 wt.% or more of an objective resin based on the total mass of any resin component constituting the microporous membrane. The microporous membrane may include polyethylene at, for example, 60 wt.% or more, 70 wt.% or more, 80 wt.% or more, 90 wt.% or more, 99 wt.% or more, or 100 wt.%, based on the total weight of any resin component constituting the microporous membrane.

In the present disclosure, the microporous membrane may include other resin, for example, a polyolefin resin other than polyethylene as long as the membrane includes polyethylene as a main component. The polyolefin resin may be a polymer including a monomer having 3 to 10 carbon atoms as a repeating structure. Examples of the monomer having 3 to 10 carbon atoms include propylene, 1-butene, 4-methyl-1-pentene, 1-hexene, and 1-octene. Such polyolefin can be, for example, a homopolymer, a copolymer, or a multistage polymerized polymer, and is preferably a homopolymer. Such polyolefin is preferably at least one selected from the group consisting of polypropylene and polybutadiene. The polyolefin resin may be used singly or as a mixture of two or more kinds thereof. Such polyolefin other than polyethylene may be a mixture of polyethylene and polypropylene, from the viewpoint of an enhancement in heat resistance of the microporous membrane.

Examples of polyethylene include low-density polyethylene (density: less than 0.925 $g/cm^3$), linear low-density polyethylene, medium-density polyethylene (density: 0.925 $g/cm^3$ or more and less than 0.942 $g/cm^3$), high-density polyethylene (density: 0.942 $g/cm^3$ or more and less than 0.970 $g/cm^3$) and ultra-high molecular weight polyethylene (density: 0.970 $g/cm^3$ or more). Such polyethylene is preferably ultra-high molecular weight polyethylene, since a separator low in melting point and high in strength can be provided. The density of such polyethylene is measured according to "D) Density gradient pipe method" described in JIS K7112 (1999).

The lower limit value of the amount of polyethylene included in the microporous membrane is 50 wt.% or more, and may be, for example, 60 wt.% or more, 70 wt.% or more, 80 wt.% or more, 90 wt.% or more, 99 wt.% or more, or 100

wt.%, based on the total mass of any resin component constituting the microporous membrane, from the viewpoint that rapid fuse characteristics are exhibited. The upper limit value of the amount of polyethylene included in the microporous membrane is preferably 99 wt.% or less, and may be, for example, 90 wt.% or less, 80 wt.% or less, or 70 wt.% or less, based on the total weight of any resin component constituting the microporous membrane.

Examples of polypropylene include isotactic polypropylene, syndiotactic polypropylene and atactic polypropylene. Examples of a copolymer of ethylene and propylene include an ethylene-propylene random copolymer and ethylene-propylene rubber.

The lower limit value of the amount of polypropylene included in the microporous membrane is preferably 1 wt.% or more, and may be 2 wt.% or more, 3 wt.% or more, 4 wt.% or more, or 5 wt.% or more, based on the total mass of any resin component constituting the microporous membrane, from the viewpoint of an enhancement in heat resistance of the microporous membrane. The lower limit value of the amount of polypropylene included in the microporous membrane is preferably 40 wt.% or less, and may be, for example, 35 wt.% or less, 30 wt.% or less, 25 wt.% or less, 20 wt.% or less, 15 wt.% or less, or 10 wt.% or less, based on the total weight of any resin component constituting the microporous membrane.

<Additive(s)>

The microporous membrane may arbitrarily contain additive(s). Examples of the additive(s) include a polymer other than polyolefin; an inorganic filler; phenolic, phosphorus and/or sulfur antioxidant(s); metal soap such as calcium stearate and/or zinc stearate; an ultraviolet light absorber; a light stabilizer; an antistatic agent; an anti-fogging compound; and/or a coloring pigment. The amount of the additive(s) is preferably 20 parts by weight or less, and may be, for example, 10 parts by weight or less, further preferably 5 parts by weight or less, based on 100 parts by weight of any resin component constituting the microporous membrane, from the viewpoint of shut-down performance or the like.

<Functional layer>

The separator for a power storage device may have one or a plurality of functional layers other than the microporous membrane, on one or both surfaces of the microporous membrane. Examples of such a functional layer include a heat-resistant layer including a heat-resistant resin of an inorganic particle or a crosslinkable polymer, and an adhesion layer including an adhesive polymer. Examples of the method for stacking such a functional layer on the microporous membrane include a method for coating the microporous membrane with such a functional layer by a coater such as a gravure coater or a die coater, and a stacking method by co-extrusion.

<Thickness of microporous membrane>

The thickness of the microporous membrane is preferably 3 μm or more and 25 μm or less. The thickness of the microporous membrane is preferably 0.1 μm or more from the viewpoint of mechanical strength, and is preferably 100 μm or less from the viewpoint of an increase in capacity of a power storage device. The thickness of the microporous membrane can be adjusted by controlling the die lip interval, the stretching ratio in a stretching step, etc.

<Porosity of microporous membrane>

The porosity of the microporous membrane is preferably 30% or more and 65% or less, further preferably 35% or more and 60% or less. The porosity is preferably 25% or more from the viewpoint of an enhancement in ion conductivity, and is preferably 95% or less from the viewpoint of withstand voltage characteristics. The porosity of the microporous membrane can be adjusted by controlling the mixing ratio of a polyethylene resin composition and a plasticizer, the stretching temperature, the stretching ratio, the heat fixation temperature, the stretching ratio in heat fixation, and/or the rate of relaxation in heat fixation, or any combination thereof.

<Air permeability of microporous membrane>

The air permeability of the microporous membrane is preferably 50 sec/100 cc or more, and preferably 300 sec/100 cc or less. The air permeability is preferably 10 sec/100 cc or more from the viewpoint that self-discharge of a power storage device is suppressed. The air permeability is preferably 1000 sec/100 cc or less from the viewpoint that favorable charge-discharge characteristics are obtained. The air permeability can be modulated by, for example, changing the stretching temperature and/or the stretching ratio.

<<Method for producing microporous membrane>>

The method for producing the separator for a power storage device of the present disclosure includes:

(1) extruding a resin composition including polyethylene and a pore-forming material into a sheet by an extruder, followed by cooling and solidifying to form a sheet-like formed body;
(2) stretching the sheet-like formed body to form a stretched sheet;
(3) extracting the pore-forming material from the stretched sheet to form a porous sheet; and
(4) heat-treating the porous sheet, to thereby perform stretching and relaxing in the width direction.

The method further includes a step of reacting the polyethylene with one or more graft molecules having a functional group for binding to a molecular chain of the polyethylene and a hetero atom-containing functional group, to thereby graft the polyethylene by the hetero atom-containing functional group, between steps (1) and (2), between steps (2) and (3), between steps (3) and (4), or after step (4).

<Grafting step>

The method for producing the separator for a power storage device of the present disclosure further includes a step of reacting the polyethylene with one or more molecules having a functional group for binding to a molecular chain of the polyethylene and a hetero atom-containing functional group, to thereby graft the polyethylene by the hetero atom-containing functional group. The grafting step can be performed between steps (1) and (2), between steps (2) and (3), between steps (3) and (4), or after step (4).

The method for producing the separator for a power storage device of the present disclosure can impart an amount of graft (degree of modification) at a high concentration due to modification of the polyethylene in the grafting step, as compared with a method where modified polyethylene grafted in advance is used as a raw material. The method can also allow even modified polyethylene generally hardly produced, to be simply modified. Accordingly, the method is a simple and low-cost production method, and is also excellent in production efficiency.

The grafting step allows the polyethylene to react with a functional group for binding to a polyethylene molecular chain, and one or more molecules (hereinafter, each also referred to as "graft molecule".) having a hetero atom-containing functional group. The hetero atom-containing functional group used in the graft molecule can be the hetero atom-containing functional group described in the section <Graft structure>.

The functional group for binding to a molecular chain of the polyethylene is preferably a functional group having a carbon-carbon unsaturated double bond, more preferably $\alpha$-olefin (carbon-carbon unsaturated double bond at an end). The functional group for binding to a molecular chain of the polyethylene is more preferably a vinyl group. A graft molecule having a vinyl group is preferable, since the molecule is inexpensive and can be simply used.

The grafting step may include immersing the sheet-like formed body obtained in step (1), the stretched sheet obtained in step (2), the porous sheet obtained in step (3), or the porous sheet heat-treated, obtained in step (4), in a solution including a solvent, the graft molecule(s), and alkylborane or an alkylborane complex; and providing oxygen into the solution to react the graft molecule(s) with the polyethylene, thereby grafting the polyethylene by the hetero atom-containing functional group.

The alkylborane or alkylborane complex is preferably a borane compound having a hydrogen atom or an alkyl group having 1 to 10 carbon atoms, and examples of the alkyl group having 1 to 10 carbon atoms include a methyl group, an ethyl group, a propyl group, a butyl group, a pentyl group, a heptyl group, an octyl group, a nonyl group, and a decyl group. The alkylborane or alkylborane complex is preferably a trialkylborane having an alkyl group having 1 to 3 carbon atoms, more preferably triethylborane.

The solvent for use in the grafting step is any solvent that can dissolve the graft molecule(s), and the alkylborane or alkylborane complex. The solvent may be an ether-based compound, a halogen-based compound or a heterocyclic compound, and examples of the ether-based compound include diethyl ether and methyl butyl ether. Examples of the halogen-based compound include chloromethane-based solvents such as chloromethane, dichloromethane, and chloroform. Examples of the heterocyclic compound include THF, furan, pyran, pyrrole, thiophene, pyridine, and NMP.

Examples of the method for providing oxygen in a solution include a method for bubbling gaseous oxygen into a solution. The concentration of oxygen in the solution is preferably 2% to 100%, desirably 10% to 90%. Air bubbling has also been experimentally revealed to exhibit a good efficiency. The temperature of the solution is preferably -30°C to 80°C, more desirably 0°C to 70°C.

It is preferable to provide oxygen into a solution including the graft molecule and the alkylborane or alkylborane complex to thereby allow a reaction represented by the following chemical reaction formula to progress. The present disclosure is not limited by the reaction.

[Formula 1]

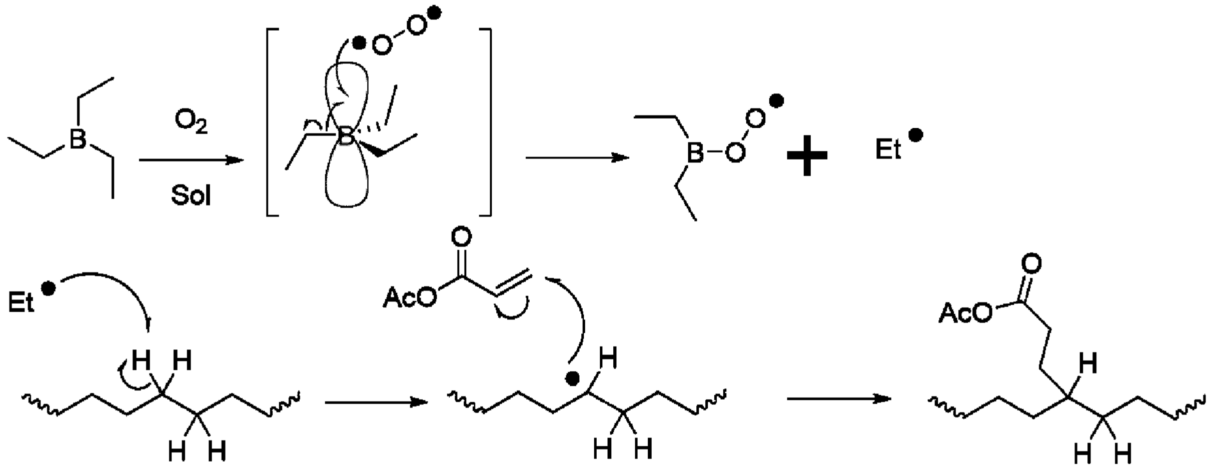


In the chemical reaction formula, first, triethylborane reacts with oxygen present in a solvent (Sol), thereby generating a peroxy radical and an ethyl radical. Next, the ethyl radical withdraws a hydrogen atom of polyethylene, and a polyethylene radical thus generated attacks an α-olefin of the graft molecule, thereby forming a bond.

The method of the present disclosure may further include, after the grafting, extracting the graft molecule and the trialkylborane or trialkylborane complex from the sheet-like formed body, the stretched sheet or the porous sheet, and drying the resultant.

A solvent for use in extraction of the graft molecule and the trialkylborane or trialkylborane complex is a dehydration solvent such as THF, hexane, pentane, benzene, toluene, dichloromethane, 1,2-dichloroethane, ethyl acetate, acetonitrile, DMSO or DMP.

<Sheet-forming step>

The sheet-forming step involves extruding a resin composition including polyethylene and a pore-forming material into a sheet by an extruder, followed by cooling and solidifying to form a sheet-like formed body. The polyethylene here used can be the resin described in the section <Polyethylene>. Examples of the pore-forming material can include a plasticizer, an inorganic material and any combination thereof.

The plasticizer here used is preferably a non-volatile solvent being capable of allowing a uniform solution to be formed at a temperature equal to or higher than the melting point of polyethylene. Examples of such a non-volatile solvent include hydrocarbons such as liquid paraffin and paraffin wax; esters such as dioctyl phthalate and dibutyl phthalate; and higher alcohols such as oleyl alcohol and stearyl alcohol. The plasticizer can be used singly or in combinations of two or more kinds thereof. The plasticizer is preferably liquid paraffin. Liquid paraffin is preferable, since it has a high compatibility with polyethylene, hardly causes interface peeling between a resin and the plasticizer to occur even when the sheet-like formed body is stretched, and makes stretching more uniform.

The ratio between polyethylene and the plasticizer may be in any range so that these can be uniformly melt-kneaded to thereby form a sheet. For example, the amount of the plasticizer in the resin composition is preferably 20 to 90 wt.%, more preferably 30 to 80 wt.% based on the total weight of the resin composition. In a case where the weight fraction of the plasticizer is 90 wt.% or less, formability in formation of a molten product into a sheet is enhanced. In a case where the amount of the plasticizer is 20 wt.% or more, a polyethylene molecular chain is hardly cleaved even when the resin composition is stretched at a high ratio, a more uniform and finer pore structure is easily formed, and strength is increased.

Examples of the inorganic material include oxide-based ceramics such as alumina, silica (silicon oxide), titania, zirconia, magnesia, ceria, yttria, zinc oxide, and iron oxide; nitride-based ceramics such as silicon nitride, titanium nitride, and boron nitride; ceramics such as silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth, and silica sand; and glass fiber. The inorganic material can be used singly or in combinations of two or more kinds thereof. The inorganic material is preferably any of silica, alumina and titania from the viewpoint of electrochemical stability, and is more preferably silica from the viewpoint of ease of extraction from the sheet-like formed body.

The amount of the inorganic material in the resin composition is preferably 5 wt.% or more, more preferably 10 wt.% or more based on the total weight of the resin composition, from the viewpoint that favorable isolation properties are obtained, and is preferably 99 wt.% or less, more preferably 95 wt.% or less from the viewpoint that high strength is

secured.

The resin composition may include additive(s) other than polyethylene and the pore-forming material. The additive(s) here used can be the additive(s) described in the section <Additive(s)>. The amount of the additive(s) in the resin composition is any amount so that the amount of the additive(s) in the microporous membrane is preferably 20 parts by weight or less, for example, 10 parts by weight or less, further preferably 5 parts by weight or less based on 100 parts by weight of any resin component constituting the microporous membrane, from the viewpoint of shut-down performance or the like.

The extruder here used can be any extruder such as a single screw extruder or a twin screw extruder. A melt-kneaded product is extruded into a sheet by the extruder. Examples of the method for extruding into a sheet include a method for extruding a melt-kneaded product into a sheet through a T die or the like. The die lip interval of the T die is preferably 200 μm or more and 3,000 μm or less, and may be, for example, 500 μm or more and 2,500 μm or less. A die lip interval of 200 μm or more can lead to a reduction of gum and the like, less influences on membrane quality, such as streaks and defects, and a reduction of any risk such as membrane breakage in a subsequent stretching step. On the other hand, a die lip interval of 3,000 μm or less can not only allow for a high speed of cooling and thus prevention of unevenness in cooling, but also allow thickness stability of a sheet to be maintained.

The melt-kneaded product extruded into a sheet is cooled and solidified, thereby obtaining a sheet-like formed body. Examples of the method for cooling and solidifying include a method involving bringing the melt-kneaded product having a sheet shape into contact with a heat conductor to thereby cool the product to a temperature sufficiently lower than the crystallization temperature of the resin component, and solidify the product. Examples of the heat conductor include a metal, water, and air. The heat conductor is preferably a metal because of a high heat conduction efficiency, and a metallic roll is more preferably used from the viewpoint of, for example, production efficiency. The melt-kneaded product extruded into a sheet, when brought into contact with a metallic roll, is further preferably sandwiched by at least a pair of rolls, since the heat conduction efficiency tends to be further increased, and also the sheet tends to be oriented to result in an increase in strength of the membrane and an enhancement in surface smoothness of the sheet.

The sheet-like formed body may be arbitrarily rolled. Such rolling can be performed by, for example, a pressing method using a double belt press machine or the like. The sheet-like formed body can be subjected to rolling, resulting in, in particular, an increase in orientation on a surface layer portion. The area rolling ratio is preferably more than 1 time and 3 times or less, more preferably more than 1 time and 2 times or less. A rolling ratio of more than 1 time tends to allow for an increase in plane orientation and an increase in strength of a porous membrane finally obtained. On the other hand, a rolling ratio of 3 times or less tends to allow for formation of a porous structure small in difference in orientation between a surface layer portion and a central inner portion and uniform in the thickness direction of the membrane.

<Stretching step>

The stretching step involves stretching the sheet-like formed body, thereby forming a stretched sheet. Such stretching may be either uniaxial stretching or biaxial stretching. Such stretching is preferably biaxial stretching from the viewpoint of an enhancement in strength of the resulting microporous membrane. The sheet-like formed body is stretched at a high ratio in the biaxial direction, resulting in molecule orientation in the plane direction, and the resulting microporous membrane is hardly ruptured and a microporous membrane having high piercing strength is obtained. Examples of the method for biaxial stretching can include respective methods for simultaneous biaxial stretching, sequential biaxial stretching, multistage stretching, and multiple time stretching. Simultaneous biaxial stretching is preferable from the viewpoint of an enhancement in piercing strength, uniformity of stretching, and shut-down properties. Sequential biaxial stretching is preferable from the viewpoint of ease of control of plane orientation.

The "simultaneous biaxial stretching" refers to a stretching method where stretching in MD (machine direction of continuous formation of the microporous membrane) and stretching in TD (direction at an angle of 90° across MD of the microporous membrane) are simultaneously performed, and the respective directions may be different in stretching ratio. The "sequential biaxial stretching" refers to a stretching method where stretching in MD and that in TD are independently performed, and when stretching in MD or TD is performed, another direction is secured in an unbound state or at a certain length.

In the case of biaxial stretching, the area ratio is preferably 20 times or more and 250 times or less, more preferably 20 times or more and 100 times or less, further preferably 25 times or more and 70 times or less. An area ratio of 20 times or more is preferable from the viewpoint of strength of the microporous membrane. An area ratio of 200 times or less is preferable from the viewpoint of a decrease of membrane breakage in the stretching step, and productivity. The stretching ratio in each of the directions is preferably 4 times or more and 10 times or less in MD and 4 times or more and 10 times or less in TD, more preferably 5 times or more and 8 times or less s in MD and 5 times or more and 8 times or less in TD. The stretching ratio refers to a value obtained by dividing the dimension of the microporous membrane after such a stretching operation by the dimension of the microporous membrane before such a stretching operation. The area ratio refers to a value obtained by multiplying the stretching ratio in MD by the stretching ratio in TD.

<Pore-forming step>

The pore-forming step involves extracting the pore-forming material from the stretched sheet, thereby forming a porous sheet. Examples of the extraction method include a method involving immersing the sheet in an extraction solvent to thereby extract the pore-forming material, and drying the resulting sheet. The extraction method may be either in a batch manner or in a continuous manner. It is preferable for suppression of shrinkage of the sheet to bind an end portion of the sheet in a series of steps of immersion and drying. The amount of the pore-forming material remaining in the resulting porous sheet is preferably adjusted to less than 1 wt.% based on the total weight of the porous sheet.

The extraction solvent is preferably a solvent which serves as a poor solvent for polyethylene and serves as a good solvent for the pore-forming material, and which has a lower boiling point than the melting point of polyethylene. Examples of the extraction solvent include hydrocarbons such as n-hexane and cyclohexane; halogenated hydrocarbons such as methylene chloride and 1,1,1-trichloroethane; non-chlorine-based halogenated solvents such as hydrofluoroether and hydrofluorocarbon; alcohols such as ethanol and isopropanol; ethers such as diethyl ether and tetrahydrofuran; and ketones such as acetone and methyl ethyl ketone. Such an extraction solvent may be recovered and recycled by an operation such as distillation. In a case where the inorganic material is used as the pore-forming material, an aqueous alkaline solution of sodium hydroxide, potassium hydroxide, or the like can be used as the extraction solvent.

<Heat treatment step>

The heat treatment step involves heat-treating the porous sheet and performing stretching and relaxing in the width direction. The heat treatment step can allow for heat fixation of the porous sheet, thereby suppressing shrinkage of the sheet. The heat treatment comprises a stretching operation for the purpose of adjustment of physical properties and a relaxing operation for the purpose of a reduction in stretching stress. The relaxing operation may be performed after the stretching operation is performed, or the stretching operation may be performed after the relaxing operation is performed. The heat treatment can be performed with a tenter or a roll stretching machine.

The temperature of the heat treatment including such a stretching or relaxing operation, etc., is preferably in a range from 100°C to 170°C from the viewpoint of a crystal structure where any chemical species for grafting is easily modified. The temperature in the stretching and relaxing operations is preferably in the above range from the viewpoint of the balance between a reduction in heat shrinkage rate of the microporous membrane and porosity. The lower limit of the heat treatment temperature is more preferably 110°C or more, further preferably 115°C or more, and the upper limit thereof is more preferably 160°C or less, further preferably 150°C or less, still further preferably 140°C or less.

The stretching operation is an operation for stretching the microporous membrane in MD and/or TD. The stretching operation may be performed in both directions of MD and TD, or may be performed in only one of MD and TD. The stretching ratio is a value obtained by dividing the dimension of the microporous membrane after the stretching operation by the dimension of the microporous membrane before the stretching operation. The stretching ratio is preferably 1.1 times or more, more preferably 1.2 times or more in each direction of MD and/or TD of the microporous membrane from the viewpoint that a microporous membrane high in strength and high in porosity is obtained.

The relaxing operation is an operation for a decrease in size of the microporous membrane in MD and/or TD. The relaxing operation may be performed in both directions of MD and TD, or may be performed in only one of MD and TD. The rate of relaxation is a value obtained by dividing the dimension of the microporous membrane after the relaxing operation by the dimension of the microporous membrane before the relaxing operation. In the case of relaxing in both MD and TD, the rate means a value obtained by multiplying the rate of relaxation in MD by the rate of relaxation in TD. The rate of relaxation is preferably 1.0 or less, more preferably 0.97 or less, further preferably 0.95 or less.

The stretching and relaxing operations are preferably performed in TD. The temperature in the stretching and relaxing operations is preferably lower than the melting point of polyethylene, more preferably in a range from a temperature lower than the melting point of polyethylene by 1°C to a temperature lower than that by 25°C. The temperature in the stretching and relaxing operations is preferably in the above range from the viewpoint of the balance between a reduction in heat shrinkage of the microporous membrane and porosity.

<Post-treatment>

The microporous membrane may be arbitrarily subjected to any post-treatment such as a hydrophilization treatment with a surfactant or the like, or a crosslinking treatment with ionizing radiation or the like.

<<Power storage device>>

The separator for a power storage device of the present disclosure can be used as a separator of a power storage device. The power storage device in the present disclosure comprises a positive electrode, a negative electrode and the

separator for a power storage device of the present disclosure, between the positive electrode and the negative electrode. Examples of the power storage device include a battery and a capacitor, preferably a lithium ion secondary battery.

The power storage device comprises an electrolytic solution, and the positive electrode, the negative electrode and the separator for a power storage device are impregnated with the electrolytic solution. The electrolytic solution may contain moisture, and the moisture contained in the system after battery production may be moisture contained in the electrolytic solution or carried-in moisture which was included in any member, for example, electrodes or separator. The electrolytic solution can contain a non-aqueous solvent. Examples of the solvent contained in the non-aqueous solvent in the present disclosure include alcohols such as methanol and ethanol; and an aprotic solvent. In particular, the non-aqueous solvent is preferably an aprotic solvent.

Examples of the aprotic solvent include a cyclic carbonate, fluoroethylene carbonate, lactone, sulfur atom-containing organic compound, chain fluorinated carbonate, cyclic ether, mononitrile, nitrile substituted with an alkoxy group, dinitrile, cyclic nitrile, short-chain fatty acid ester, chain ether, fluorinated ether, ketone, and a compound where some of or all H atoms in the aprotic solvent are each replaced with a halogen atom.

Examples of the cyclic carbonate include ethylene carbonate, propylene carbonate, 1,2-butylene carbonate, trans-2,3-butylene carbonate, cis-2,3-butylene carbonate, 1,2-pentylene carbonate, trans-2,3-pentylene carbonate, cis-2,3-pentylene carbonate, vinylene carbonate, 4,5-dimethylvinylene carbonate and vinyl ethylene carbonate.

Examples of the fluoroethylene carbonate include 4-fluoro-1,3-dioxolan-2-one, 4,4-difluoro-1,3-dioxolan-2-one, cis-4,5-difluoro-1,3-dioxolan-2-one, trans-4,5-difluoro-1,3-dioxolan-2-one, 4,4,5-trifluoro-1,3-dioxolan-2-one, 4,4,5,5-tetrafluoro-1,3-dioxolan-2-one and 4,4,5-trifluoro-5-methyl-1,3-dioxolan-2-one.

Examples of the lactone include γ-butyrolactone, α-methyl-y-butyrolactone, γ-valerolactone, γ-caprolactone, δ-valerolactone, δ-caprolactone and ε-caprolactone.

Examples of the sulfur atom-containing organic compound include ethylene sulfite, propylene sulfite, butylene sulfite, pentene sulfite, sulfolane, 3-sulfolene, 3-methylsulfolane, 1,3-propanesultone, 1,4-butanesultone, 1-propene 1,3-sultone, dimethylsulfoxide, tetramethylene sulfoxide and ethylene glycol sulfite.

Examples of the chain carbonate include ethyl methyl carbonate, dimethyl carbonate, diethyl carbonate, methyl propyl carbonate, methyl isopropyl carbonate, dipropyl carbonate, methyl butyl carbonate, dibutyl carbonate and ethyl propyl carbonate.

Examples of the cyclic ether include tetrahydrofuran, 2-methyltetrahydrofuran, 1,4-dioxane and 1,3-dioxane.

Examples of the mononitrile include acetonitrile, propionitrile, butyronitrile, valeronitrile, benzonitrile and acrylonitrile.

Examples of the nitrile substituted with an alkoxy group include methoxyacetonitrile and 3-methoxypropionitrile.

Examples of the dinitrile include malononitrile, succinonitrile, methyl succinonitrile, glutaronitrile, 2-methylglutaronitrile, adiponitrile, 1,4-dicyanoheptane, 1,5-dicyanopentane, 1,6-dicyanohexane, 1,7-dicyanoheptane, 2,6-dicyanoheptane, 1,8-dicyanooctane, 2,7-dicyanooctane, 1,9-dicyanononane, 2,8-dicyanononane, 1,10-dicyanodecane, 1,6-dicyanodecane, and 2,4-dimethylglutaronitrile and ethylene glycol bis(propionitrile)ether.

Examples of the cyclic nitrile include benzonitrile.

Examples of the short-chain fatty acid ester include methyl acetate, methyl propionate, methyl isobutyrate, methyl butyrate, methyl isovalerate, methyl valerate, methyl pivalate, methyl hydroangelate, methyl caproate, ethyl acetate, ethyl propionate, ethyl isobutyrate, ethyl butyrate, ethyl isovalerate, ethyl valerate, ethyl pivalate, ethyl hydroangelate, ethyl caproate, propyl acetate, propyl propionate, propyl isobutyrate, propyl butyrate, propyl isovalerate, propyl valerate, propyl pivalate, propyl hydroangelate, propyl caproate, isopropyl acetate, isopropyl propionate, isopropyl isobutyrate, isopropyl butyrate, isopropyl isovalerate, isopropyl valerate, isopropyl pivalate, isopropyl hydroangelate, isopropyl caproate, butyl acetate, butyl propionate, butyl isobutyrate, butyl butyrate, butyl isovalerate, butyl valerate, butyl pivalate, butyl hydroangelate, butyl caproate, isobutyl acetate, isobutyl propionate, isobutyl isobutyrate, isobutyl butyrate, isobutyl isovalerate, isobutyl valerate, isobutyl pivalate, isobutyl hydroangelate, isobutyl caproate, tert-butyl acetate, tert-butyl propionate, tert-butyl isobutyrate, tert-butyl butyrate, tert-butyl isovalerate, tert-butyl valerate, tert-butyl pivalate, tert-butyl hydroangelate and tert-butyl caproate.

Examples of the chain ether include dimethoxyethane, diethyl ether, 1,3-dioxolane, diglyme, triglyme and tetraglyme. Examples of the fluorinated ether include a compound represented by general formula $Rf_{aa}$-$OR_{bb}$ (wherein $Rf_{aa}$ is a fluorine atom-containing alkyl group and $R_{bb}$ is an organic group optionally containing a fluorine atom). Examples of the ketone include acetone, methyl ethyl ketone and methyl isobutyl ketone.

Examples of the compound where some of or all H atoms in the aprotic solvent are each replaced with a halogen atom can include a compound where such halogen atoms are fluorine.

Examples of fluoride of the chain carbonate include methyl trifluoroethyl carbonate, trifluorodimethyl carbonate, trifluorodiethyl carbonate, trifluoroethyl methyl carbonate, methyl 2,2-difluoroethyl carbonate, methyl 2,2,2-trifluoroethyl carbonate and methyl 2,2,3,3-tetrafluoropropyl carbonate. The fluorinated chain carbonate can be represented by the following general formula:

$R_{cc}$-O-C(O)O-$R_{dd}$

wherein $R_{cc}$ and $R_{dd}$ are each at least one selected from the group consisting of $CH_3$, $CH_2CH_3$, $CH_2CH_2CH_3$, $CH(CH_3)_2$, and a group represented by formula $CH_2Rf_{ee}$ (wherein $Rf_{ee}$ is an alkyl group having 1 to 3 carbon atoms, in which a hydrogen atom is replaced with at least one fluorine atom), and $R_{cc}$ and/or Rdd contain(s) at least one fluorine atom.

Examples of fluoride of the short-chain fatty acid ester include fluorinated short-chain fatty acid esters typified by 2,2-difluoroethyl acetate, 2,2,2-trifluoroethyl acetate and 2,2,3,3-tetrafluoropropyl acetate. Such fluorinated short-chain fatty acid ester can be represented by the following general formula:

$R_{ff}$-C(O)O-$R_{gg}$

wherein $R_{ff}$ is at least one selected from the group consisting of $CH_3$, $CH_2CH_3$, $CH_2CH_2CH_3$, $CH(CH_3)_2$, $CF_3CF_2H$, $CFH_2$, $CF_2H$, $CF_2Rf_{hh}$, $CFHRf_{hh}$, and $CH_2Rf_{ii}$, $R_{gg}$ is at least one selected from the group consisting of $CH_3$, $CH_2CH_3$, $CH_2CH_2CH_3$, $CH(CH_3)_2$, and $CH_2Rf_{ii}$, $Rf_{hh}$ is an alkyl group having 1 to 3 carbon atoms, in which a hydrogen atom may be replaced with at least one fluorine atom, $Rf_{ii}$ is an alkyl group having 1 to 3 carbon atoms, in which a hydrogen atom is replaced with at least one fluorine atom, and Rff and/or $R_{gg}$ contain(s) at least one fluorine atom, in which, in a case where $R_{ff}$ is $CF_2H$, $R_{gg}$ is not $CH_3$.

EXAMPLES

Hereinafter, embodiments of the present disclosure will be specifically described with reference to Examples and Comparative Examples, but the present disclosure is not limited to such Examples and Comparative Examples.

<<Measurement and evaluation methods>>

<Thickness (μm) of microporous membrane>

A specimen of 10 cm × 10 cm square was cut from the microporous membrane, 9 points (3 points × 3 points) were selected in a lattice manner, and the thickness of the microporous membrane was measured with a micro thickness meter (Type KBM manufactured by Toyo Seiki Seisaku-sho, Ltd.) at a room temperature of 23±2°C. The average value of the measurement values obtained at such 9 points was calculated as the thickness (μm) of the microporous membrane.

<Strength per weight (gf/g) >

A specimen of 10 cm × 10 cm square was cut from the microporous membrane, the weight (g) thereof was measured, thereafter the piercing strength (gf) was measured at the central portion, and the strength per weight (gf/g) was calculated from the following formula.

$$\text{Strength per weight (gf/g)} = \text{Piercing strength (gf)/Weight (g)}$$

The piercing strength was here determined by performing a piercing test of such a specimen membrane in conditions of a curvature radius of needle tip of 0.5 mm and a piercing speed of 2 mm/sec by use of a handy compression tester "KES-G5" (trademark, manufactured by Kato Tech Co., Ltd.).

<Porosity (%) of microporous membrane>

A sample of 10 cm × 10 cm square was cut from the microporous membrane, and the volume ($cm^3$) and the weight (g) thereof were determined. Such values were used, the density of the microporous membrane was set to 0.95(g/$cm^3$), and the porosity was calculated from the following formula.

$$\text{Porosity (\%)} = (1 - \text{Wight/Volume}/0.95) \times 100$$

<Air permeability (sec/100 cc) of microporous membrane>

The air permeability was measured as the air permeability (sec/100 cc) determined by measuring the time (sec) taken for passing of 100 cc of air through a microporous membrane having an area of 645 $mm^2$ (circle having a diameter of 28.6 mm) by use of a Gurley type air permeability meter G-B2 (trademark, weight of inner cylinder: 567 g) manufactured by

Toyo Seiki Seisaku-sho, Ltd., according to JIS P-8117.

<Rate (%) of volume recovery before and after compression in electrolytic solution>

A sample of 10 cm × 10 cm square was cut from the microporous membrane, and compressed at 10 MPa by a hot press machine heated to 60°C, for 3 minutes, in the state of being impregnated with a non-aqueous electrolytic solution described in Item c of the following <Production of battery for evaluation>, thereafter the pressure was released, the resultant was left to still stand for 10 minutes, thereafter an electrolytic solution was removed by sequential washing with ethanol and acetone in the listed order, and the resultant was dried in air. The thickness of a microporous membrane obtained by the above operations was measured according to the method described in the above <Thickness (μm) of microporous membrane>. Herein, the average value obtained by such measurement at any 25 points in the sample was used.

Rate (%) of volume recovery before and after compression in electrolytic solution = 100 × (Thickness after compression operation in state of swelling with electrolytic solution/Thickness before compression operation in state of swelling with electrolytic solution)

<Pulse NMR>

A pulse NMR measuring apparatus (Minispec MQ20 manufactured by Bruker Japan K.K.) was used to observe the spin-spin relaxation time ($T_2$ relaxation time) of all protons of the microporous membrane in the following conditions.

(1) Conditions of solid echo method

Type of nucleus: 1H
Measurement: $T_2$
Measurement temperature: 120°C (measured after 5 minutes after reaching the preset temperature)
Cumulative number: 256 times
Repetition time: 5.0 sec

The maximum intensity observed at the start of measurement (immediately after pulse disconnection, several microseconds) was defined as reference (100%), and the proportion of each signal intensity at 0.2 msec and 0.8 msec after the start of measurement was observed with respect to each of Examples and Comparative Examples. In a case where the signal intensity detected was 2.0% or less, the average value at around ±0.1 msec was adopted.

(2) Conditions of CPMG method

Type of nucleus: 1H
Measurement: T2
Measurement temperature: 180°C (measured after 5 minutes after reaching the preset temperature)
Cumulative number: 256 times
Pulse interval: 0.1 msec
Number of echos: 800 times
Repetition time: 5.0 sec

The proportion of each signal intensity at 40 msec and 140 msec after the start of measurement was observed also in the CPMG method with respect to each of Examples and Comparative Examples, in the same manner as in the solid echo method. Measurement of pulse NMR could be performed about the separator before assembling into a battery and the separator after assembling into a battery. The separator after assembling into a battery was one after a chemical reaction of grafting was progressed, in some cases. In the case of measurement of the separator after assembling into a battery, the separator taken out from the battery was washed with ethanol and acetone multiple times, an electrolytic solution and an electrolyte were removed therefrom by sufficient washing, and the resultant separator was dried under vacuum and then subjected to the measurement. In the case of a separator of a composite of an inorganic substance-containing coating layer, a resin binder-containing coating layer and a resin composition-containing coating layer, the

separator was washed with a solvent, a microporous membrane including PE as a main component was separated from such a layered structure, and thereafter the measurement was performed. Incidentally, with regard to the measurement of pulse NMR, Non Patent Literatures 4 to 6 can be referred to.

<Weight average molecular weight (Mw) and number average molecular weight (Mn)>

A calibration curve was created by subjecting standard polystyrene to measurement in the following conditions by use of ALC/GPC150C Model (trademark) manufactured by Waters Corporation. The following respective polymers were subjected to chromatographic measurement in the same conditions, and the weight average molecular weight and the number average molecular weight of each of the polymers were calculated based on the calibration curve, according to the following method.

Column: $GMH_6$-HT (trademark) × 2 and $GMH_6$-HTL (trademark) × 2, manufactured by Tosoh Corporation
Mobile phase: o-dichlorobenzene
Detector: differential refractometer
Flow rate: 1.0 ml/min
Column temperature: 140°C
Concentration of specimen: 0.1% by weight
(Each weight average molecular weight and each number average molecular weight of polyethylene and polypropylene)

The weight average molecular weight and the number average molecular weight were calculated by multiplying 0.43 (Q factor of polyethylene/Q factor of polystyrene = 17.7/41.3) or 0.64 (Q factor of polypropylene/Q factor of polystyrene = 26.4/41.3) by each molecular weight component in the resulting calibration curve to thereby obtain a molecular weight distribution curve in terms of polyethylene or in terms of polypropylene.

<Viscosity average molecular weight (Mv)>

The intrinsic viscosity [η] at 135°C in decaline solvent was determined based on ASTM-D4020.
The Mv of polyethylene was calculated by the following formula.

$$[\eta] = 6.77 \times 10^{-4} \, Mv^{0.67}$$

The Mv of polypropylene was calculated by the following formula.

$$[\eta] = 1.10 \times 10^{-4} \, Mv^{0.80}$$

<Production of battery for evaluation>

a. Production of positive electrode

A slurry was prepared by dispersing 92.2 wt.% of lithium/cobalt composite oxide $LiCoO_2$ as a positive electrode active material, 2.3 wt.% of each conductive material of scale-like graphite and acetylene black, and 3.2 wt.% of polyvinylidene fluoride (PVDF) as a binder, in N-methylpyrrolidone (NMP). One surface of aluminum foil having a thickness of 20 μm, serving as a positive electrode current collector, was coated with the slurry by a die coater, and the resultant was dried at 130°C for 3 minutes and thereafter subjected to compression molding by a roll press machine. The amount of coating of a positive electrode with the active material was adjusted to 250 $g/m^2$, and the bulk density of the active material was adjusted to 3.00 $g/cm^3$.

b. Production of negative electrode

A slurry was prepared by dispersing 81.9 wt.% of artificial graphite as a negative electrode active material, 15 wt.% of a silicon particle (Silgrain e-Si408) manufactured by Elkem Japan, and 1.4 wt.% of an ammonium salt of carboxymethyl cellulose and 1.7 wt.% of a styrenebutadiene copolymer latex, each serving as a binder, in purified water. One surface of copper foil having a thickness of 12 μm, serving as a negative electrode current collector, was coated with the slurry by a die coater, and the resultant was dried at 120°C for 3 minutes and thereafter subjected to compression

molding by a roll press machine. The amount of coating of a negative electrode with the active material was adjusted to 106 $g/m^2$, and the bulk density of the active material was adjusted to 1.35 $g/cm^3$.

c. Preparation of non-aqueous electrolytic solution

A non-aqueous electrolytic solution was prepared by dissolving $LiPF_6$ as a solute in a mixed solvent of ethylene carbonate and ethyl methyl carbonate at a volume ratio of 1:2 so that the concentration was 1.0 mol/L.

d. Assembling of battery

Each of the separators obtained in Examples and Comparative Examples was cut out to a circle having a diameter of 18 mm, the positive electrode and the negative electrode were each cut out to a circle having a diameter of 16 mm, the positive electrode, the separator and the negative electrode were oppositely in alternating manner for 28 sets so that the respective active material surfaces of the positive electrode and the negative electrode were opposite to each other, and the resultant was received in a stainless metal container with a lid. The container and the lid were insulated, and the container was in contact with the copper foil of the negative electrode and the lid was in contact with the aluminum foil of the positive electrode. The non-aqueous electrolytic solution obtained in c. described above was injected into the container, and the container was sealed. After the resultant was left to still stand at room temperature for one day, the initial charge after battery production was performed for 6 hours in total in a way that the battery was charged to a battery voltage of 4.2 V at a current value of 3 mA (0.5 C) and, after reaching the battery voltage, the current value was started to be suppressed from 3 mA with the voltage being retained at 4.2 V, in an atmosphere at 25°C. Subsequently, the battery was discharged to a battery voltage of 3.0 V at a current value of 3 mA (0.5 C).

<Retention rate (%) of cycle characteristics of battery at 1000$^{th}$ cycle>

The battery assembled according to a to d described above was used to evaluate cycle characteristics. The resulting battery was charged and discharged for 1000 cycles under an atmosphere at 40°C. The charge was performed for 3 hours in total in a way that the battery was charged to a battery voltage of 4.2 V at a current value of 6.0 mA (1.0 C) and, after reaching the battery voltage, the current value was started to be suppressed from 6.0 mA with the voltage being retained at 4.2 V. The battery was discharged to a battery voltage of 3.0 V at a current value of 6.0 mA (1.0 C). The capacity retention rate was calculated based on the discharge capacity at the 1000$^{th}$ cycle and the discharge capacity at the 1$^{st}$ cycle. A high capacity retention rate was evaluated to indicate favorable cycle characteristics.

<Acceptance rate (%) in nailing test after 1000$^{th}$ cycle with respect to cycle characteristics>

A battery subjected to the charge/discharge for 1000 cycles was left to still stand on an iron plate in a temperature-controllable explosion-proof booth. The temperature in the explosion-proof booth was set to 40°C, an iron nail having a diameter of 3.0 mm was allowed to penetrate through the central portion of the battery at a speed of 2 mm/sec, and the state where the nail penetrates therethrough was retained. The temperature of a thermocouple which was installed in the nail so as to be able to measure the temperature in the battery after penetration of the nail was measured, and the occurrence of ignition was evaluated.

A battery newly produced by the same procedure was used to repeat the evaluation, and the number of samples not leading to ignition (no ignition) was calculated as the % value, according to the following formula. The evaluation was performed with 100 batteries each produced by use of each separator.

Evaluation result (%) = (100 × Number of samples not leading to ignition/Total number of samples)

<<Example 1>>

<Example of film formation>

Sheet formation step:

A polyethylene homopolymer (ultra-high molecular weight polyethylene) having a weight average molecular weight of 1,900,000 and a viscosity average molecular weight of 2,300,000 was used as a raw material polyethylene. To the polyethylene was added 1 wt.% of pentaerythrityl-tetrakis-[3-(3,5-di-t-butyl-4-hydroxyphenyl)propionate] as an antioxidant, and the resultant was dry blended with a Tumblr blender, thereby obtaining a mixture. The resulting mixture was fed to a twin screw extruder by a feeder under a nitrogen atmosphere. Liquid paraffin (kinetic viscosity at 37.78°C: 7.59

$\times 10^{-5}$ $m^2/s$) was injected into an extruder cylinder by a plunger pump. The mixture and the liquid paraffin were melt-kneaded in the extruder, and the feeder and the pump were adjusted so that the proportion of the amount of the liquid paraffin in a polyethylene composition extruded was 70 wt.% (i.e., so that the concentration of polymer was 26 wt.%). The melt-kneading conditions were as follows: temperature set: 230°C; number of screw rotations: 240 rpm, and amount of ejection: 18 kg/h. Subsequently, a melt-kneaded product was extruded and cast on a cooling roll controlled to a surface temperature of 20°C, through a T-die, thereby obtaining a gel sheet (sheet-like formed body) having a net thickness of 1750 μm.

Stretching step:

Next, the gel sheet was introduced into a simultaneous biaxial tenter stretching machine, and biaxial stretching was performed, thereby obtaining a stretched product (stretched sheet). The stretching conditions set were as follows: magnification in MD: 7.0 times; magnification in TD; 7.14 times (i.e., 7 × 7.14 times = 49.98 times ≅ 50 times); and biaxial stretching temperature: 115°C.

Porous body formation step:

Next, the gel sheet after stretching was introduced into a dichloromethane tank and sufficiently immersed in dichloromethane to thereby extract and remove the liquid paraffin, and thereafter dichloromethane was removed by drying, thereby obtaining a porous body (porous sheet).

Heat treatment step:

Next, the porous body was introduced into a TD tenter in order to perform heat fixation (HS), HS was performed at a heat fixation temperature of 129°C and at a stretching ratio of 2.0 times in the TD direction, and thereafter a relaxing operation at a ratio of 0.9 times in the TD direction (i.e., stretching at a ratio of 2.0 times and thereafter an relaxing operation at a ratio of 1.8 times, in the TD direction, based on a state before the heat treatment step).

Grafting step:

A membrane obtained in the heat treatment step was introduced into a THF solution tank containing trimethoxyvinylsilane (10% by weight) and triethylborane (1 mol/l), and a grafting reaction was performed with air bubbling from the lower portion of the tank. Subsequently, an unreacted trimethoxyvinylsilane and triethylborane as a catalyst were removed by washing with THF and thereafter THF was removed by drying, thereby obtaining a membrane grafted by a hetero atom-containing functional group. Thereafter, an end portion of the resulting microporous membrane was cut, and the resultant was wound up in the form of a mother roll having a width of 1,100 mm and a length of 5,000 m.

<<Examples 2 to 14>>

Each separator for a power storage device was obtained in the same manner as in Example 1 except that the conditions were changed as shown in Tables 1 and 2.

<<Comparative Examples 1 to 4>>

Each separator for a power storage device was obtained in the same manner as in Example 1 except that the conditions were changed as shown in Table 3. In each of Comparative Examples 1 and 2, the concentration of oxygen was "0%" and the presence of borane was "None", and therefore no hetero atom-containing functional group was grafted on the surface of such each separator for a power storage device.

[Table 1]

Table 1

| | | | Example 1 | Example 2 | Example 3 | Example 4 | Example 5 | Example 6 | Example 7 |
|---|---|---|---|---|---|---|---|---|---|
| Sheet formation step | Concentration of polymer | % | 30 | 30 | 30 | 30 | 30 | 30 | 30 |
| | Sheet cooling temperature | °C | 20 | 20 | 20 | 20 | 20 | 20 | 20 |
| Stretching step | Stretching ratio | - | 50 | 50 | 50 | 50 | 50 | 50 | 50 |
| | Stretching temperature | °C | 115 | 115 | 115 | 115 | 115 | 115 | 115 |
| Porous body formation step | Type of plasticizer extraction solvent | | Dichloromethane | Dichloromethane | Dichloromethane | Dichloromethane | Dichloromethane | Dichloromethane | Dichloromethane |
| Heat treatment step | Stretching-relaxation ratio | | 2.0 - 1.8 | 2.0 - 1.8 | 2.0 - 1.8 | 2.0 - 1.8 | 2.0 - 1.8 | 2.0 - 1.8 | 2.0 - 1.8 |
| | Treatment temperature | | 129 | 129 | 129 | 129 | 129 | 129 | 129 |
| Grafting treatment step | Reagent for treatment | | Triethylborane | Triethylborane | Triethylborane | Triethylborane | Triethylborane | Triethylborane-triethylamine complex | Triethylborane |
| | Concentration of oxygen | | Air | Air | Air | Air | Air | Air | 2% |
| | Type of low molecule for grafting | | Trimethoxyvinylsilane | Vinyl acetate<br>Methyl acrylate | Diethylene glycol monovinyl ether | Methyl acrylate | TEMPPO radical analogs (FIG. 5) | Trimethoxyvinylsilane | Trimethoxyvinylsilane |
| | Timing of treatment | | After (4) | After (4) | After (4) | After (4) | After (4) | After (4) | After (4) |

(continued)

| | | | | | Example 1 | Example 2 | Example 3 | Example 4 | Example 5 | Example 6 | Example 7 |
|---|---|---|---|---|---|---|---|---|---|---|---|
| Microporous membrane | Basic physical properties | | Thickness | um | 15 | 15 | 15 | 15 | 15 | 15 | 15 |
| | | | strength per weight | gf/g | 8,500 | 8,500 | 8,500 | 8,500 | 8,500 | 8,500 | 8,500 |
| | | | Porosity | % | 50 | 50 | 50 | 50 | 50 | 50 | 50 |
| | | | Air permeability | sec | 185 | 185 | 185 | 185 | 185 | 185 | 185 |
| | Measurement of spin-spin relaxation time | Solid echo measurement at 120°C | Signal intensity at 0.2 msec after start of observation | % | 12.2 | 14.3 | 10.2 | 8.8 | 9.4 | 9.3 | 9.5 |
| | | | Signal intensity at 0.8 msec after start of observation | % | 2.5 | 2.1 | 2.3 | 2.6 | 2.7 | 2.9 | 1.9 |
| | | CPMG measurement at 180°C | Signal intensity at 40 msec after start of observation | % | 18.8 | 12.6 | 20.5 | 12.9 | 15.2 | 23.5 | 10.9 |
| | | | Signal intensity at 140 msec after start of observation | % | 9.2 | 8.5 | 12.1 | 4.9 | 6.3 | 3.6 | 3.3 |
| Effects of addition | | | | | Formation of crosslinked structure of non-crystal portion by self-condensation reaction-Enhancement in heat resistance | Formation of crosslinked structure of non-crystal portion by ester condensation reaction-Enhancement in heat resistance | Formation of lithium ion chelate complex formation structure-Reduction in resistance at separator interface | Formation of coordinate bond structure-Increase in adhesiveness to other member | Formation of oxidation/reduction unit-Prevention of growth of lithium dendrite | Formation of crosslinked structure of non-crystal portion by self-condensation reaction-Enhancement in heat resistance | Formation of crosslinked structure of non-crystal portion by self-condensation reaction-Enhancement in heat resistance |

(continued)

| | | | Example 1 | Example 2 | Example 3 | Example 4 | Example 5 | Example 6 | Example 7 |
|---|---|---|---|---|---|---|---|---|---|
| Battery performance | Retention rate of cycle characteristics at 1000th cycle | % | 91 | 89 | 95 | 98 | 92 | 92 | 89 |
| | Acceptance rate in nailing test after 1000th cycle with respect to cycle characteristics | % | 99 | 92 | 82 | 76 | 71 | 98 | 97 |

[Table 2]

Table 2

| | | | Example 8 | Example 9 | Example 10 | Example 11 | Example 12 | Example 13 | Example 14 |
|---|---|---|---|---|---|---|---|---|---|
| Sheet formation step | Concentration of polymer | % | 30 | 30 | 30 | 30 | 35 | 33 | 34 |
| | Sheet cooling temperature | °C | 20 | 20 | 20 | 20 | 20 | 20 | 35 |
| Stretching step | Stretching ratio | - | 50 | 50 | 50 | 50 | 48 | 50 | 52 |
| | Stretching temperature | °C | 115 | 115 | 115 | 115 | 116 | 117 | 119 |
| Porous body formation step | Type of plasticizer extraction solvent | | Dichloromethane | Dichloromethane | Dichloromethane | Dichloromethane | Dichloromethane | Dichloromethane | Dichloromethane |
| Heat treatment step | Stretching-relaxation ratio | | 2.0 -1.8 | 2.0 - 1.8 | 2.0 - 1.8 | 2.0 - 1.8 | 2.0 - 1.8 | 2.0 -1.8 | 2.0 - 1.8 |
| | Treatment temperature | | 129 | 129 | 129 | 129 | 129 | 129 | 129 |
| Grafting treatment step | Reagent for treatment | | Triethylborane | Triethylborane | Triethylborane | Triethylborane | Triethylborane | Triethylborane | Triethylborane |
| | Concentration of oxygen | | 100% | Air | Air | Air | Air | Air | Air |
| | Type of low molecule for grafting | | Trimethoxyvinylsilane | Trimethoxyvinylsilane | Trimethoxyvinylsilane | Trimethoxyvinylsilane | Trimethoxyvinylsilane | Trimethoxyvinylsilane | Trimethoxyvinylsilane |
| | Timing of treatment | | After (4) | (1) - (2) | (2) - (3) | (3) - (4) | After (4) | After (4) | After (4) |

(continued)

| | | | | | Example 8 | Example 9 | Example 10 | Example 11 | Example 12 | Example 13 | Example 14 |
|---|---|---|---|---|---|---|---|---|---|---|---|
| Microporous membrane | Basic physical properties | | Thickness | um | 15 | 15 | 15 | 15 | 6 | 11 | 9 |
| | | | strength per weight | gf/g | 8,500 | 8,500 | 8,500 | 8,500 | 9,500 | 5,600 | 4,600 |
| | | | Porosity | % | 50 | 50 | 50 | 50 | 32 | 42 | 48 |
| | | | Air permeability | sec | 185 | 185 | 185 | 185 | 130 | 155 | 80 |
| | Measurement of spin-spin relaxation time | Solid echo measurement at 120°C | Signal intensity at 0.2 msec after start of observation | % | 11.2 | 10.3 | 15.3 | 11.9 | 10.3 | 10.8 | 11.4 |
| | | | Signal intensity at 0.8 msec after start of observation | % | 2.3 | 2.6 | 3.2 | 4.2 | 5.2 | 4.1 | 2.3 |
| | | CPMG measurement at 180°C | Signal intensity at 40 msec after start of observation | % | 18.3 | 10.3 | 25.5 | 13.3 | 18.3 | 21.5 | 15.5 |
| | | | Signal intensity at 140 msec after start of observation | % | 8.2 | 7.4 | 11.8 | 5.2 | 3.7 | 2.2 | 4.7 |

(continued)

| | | | Example 8 | Example 9 | Example 10 | Example 11 | Example 12 | Example 13 | Example 14 |
|---|---|---|---|---|---|---|---|---|---|
| Effects of addition | | | Formation of crosslinked structure of non-crystal portion by self-condensation reaction-Enhancement in heat resistance | Formation of crosslinked structure of non-crystal portion by self-condensation reaction-Enhancement in heat resistance | Formation of crosslinked structure of non-crystal portion by self-condensation reaction-Enhancement in heat resistance | Formation of crosslinked structure of non-crystal portion by self-condensation reaction-Enhancement in heat resistance | Formation of crosslinked structure of non-crystal portion by self-condensation reaction-Enhancement in heat resistance | Formation of crosslinked structure of non-crystal portion by self-condensation reaction-Enhancement in heat resistance | Formation of crosslinked structure of non-crystal portion by self-condensation reaction-Enhancement in heat resistance |
| Battery performance | Retention rate of cycle characteristics at 1000th cycle | % | 85 | 86 | 84 | 81 | 90 | 91 | 90 |
| | Acceptance rate in nailing test after 1000th cycle with respect to cycle characteristics | % | 94 | 90 | 91 | 88 | 91 | 98 | 93 |

[Table 3]

Table 3

| | | | | | Comparative Example 1 | Comparative Example 2 | Comparative Example 3 | Comparative Example 4 |
|---|---|---|---|---|---|---|---|---|
| Sheet formation step | Concentration of polymer | | | % | 30 | 30 | 30 | 30 |
| | Sheet cooling temperature | | | °C | 20 | 20 | 20 | 20 |
| Stretching step | Stretching ratio | | | - | 50 | 50 | 50 | 50 |
| | Stretching temperature | | | °C | 115 | 115 | 115 | 115 |
| Porous body formation step | Type of plasticizer extraction solvent | | | | Dichloromethane | Dichloromethane | Dichloromethane | Dichloromethane |
| Heat treatment step | Stretching-relaxation ratio | | | | 2.0 - 1.8 | 2.0 -1.8 | 2.0 - 1.8 | 2.0 - 1.8 |
| | Treatment temperature | | | | 129 | 129 | 129 | 129 |
| Grafting treatment step | Reagent for treatment | | | | Triethylborane | None | Triethylborane | Triethylborane |
| | Concentration of oxygen | | | | 0%(N2 gas) | Air | Air | Air |
| | Type of low molecule for grafting | | | | Trimethoxyvinylsilane | Trimethoxyvinylsilane | 1-Heptene | 1-Heptyne |
| | Timing of treatment | | | | After (4) | After (4) | After (4) | After (4) |
| Microporous membrane | Basic physical properties | | Thickness | um | 15 | 15 | 15 | 15 |
| | | | strength per weight | gf/g | 8,500 | 8,500 | 8,500 | 8,500 |
| | | | Porosity | % | 50 | 50 | 50 | 50 |
| | | | Air permeability | sec | 185 | 185 | 185 | 185 |
| | Measurement of spin-spin relaxation time | Solid echo measurement at 120°C | Signal intensity at 0.2 msec after start of observation | % | 0.15 | 0.15 | 0.18 | 43 |
| | | | Signal intensity at 0.8 msec after start of observation | % | 0.03 | 0.03 | 0.04 | 13.2 |
| | | CPMG measurement at 180°C | Signal intensity at 40 msec after start of observation | % | 4.2 | 4.2 | 4 | 32.2 |
| | | | Signal intensity at 140 msec after start of observation | % | 1.12 | 1.12 | 1.3 | 23.7 |
| Effects of addition | | | | | No change | None | None | None |

(continued)

| | | | Comparative Example 1 | Comparative Example 2 | Comparative Example 3 | Comparative Example 4 |
|---|---|---|---|---|---|---|
| Battery performance | Retention rate of cycle characteristics at 1000th cycle | % | 54 | 53 | 51 | 54 |
| | Acceptance rate in nailing test after 1000th cycle with respect to cycle characteristics | % | 3 | 2 | 2 | 2 |

<<Example 15>>

<Example of film formation>

Sheet formation step:

A polyethylene homopolymer (ultra-high molecular weight polyethylene) having a weight average molecular weight of 2,100,000 and a viscosity average molecular weight of 2,370,000 was used as a raw material polyethylene. To the polyethylene was added 1 wt.% of pentaerythrityl-tetrakis-[3-(3,5-di-t-butyl-4-hydroxyphenyl)propionate] as an antioxidant, and the resultant was dry blended with a Tumblr blender, thereby obtaining a mixture. The resulting mixture was fed to a twin screw extruder by a feeder under a nitrogen atmosphere. Liquid paraffin (kinetic viscosity at 37.78°C: 7.59 $\times 10^{-5}$ $m^2/s$) was injected into an extruder cylinder by a plunger pump. The mixture and the liquid paraffin were melt-kneaded in the extruder, and the feeder and the pump were adjusted so that the proportion of the amount of the liquid paraffin in a polyethylene composition extruded was 70 wt.% (i.e., so that the concentration of polymer was 25 wt.%). The melt-kneading conditions were as follows: temperature set: 230°C; number of screw rotations: 240 rpm, and amount of ejection: 18 kg/h. Subsequently, a melt-kneaded product was extruded and cast on a cooling roll controlled to a surface temperature of 20°C, through a T-die, thereby obtaining a gel sheet (sheet-like formed body) having a net thickness of 1800 μm.

Stretching step:

Next, the gel sheet was introduced into a simultaneous biaxial tenter stretching machine, and biaxial stretching was performed, thereby obtaining a stretched product (stretched sheet). The stretching conditions set were as follows: magnification in MD: 7.0 times; magnification in TD: 6.9 times (i.e., 7 $\times$ 6.9 times = 48.3 times); and biaxial stretching temperature: 115°C.

Porous body formation step:

Next, the gel sheet after stretching was introduced into a dichloromethane tank and sufficiently immersed in dichloromethane to thereby extract and remove the liquid paraffin, and thereafter dichloromethane was removed by drying, thereby obtaining a porous body (porous sheet).

Heat treatment step:

Next, the porous body was introduced into a TD tenter in order to perform heat fixation (HS), HS was performed at a heat fixation temperature of 129°C and at a stretching ratio of 2.0 times in the TD direction, and thereafter a relaxing operation at a ratio of 0.9 times in the TD direction (i.e., stretching at a ratio of 2.0 times and thereafter an relaxing operation at a ratio of 1.8 times, in the TD direction, based on a state before the heat treatment step).

Grafting step:

A membrane obtained in the heat treatment step was introduced into a THF solution tank containing trimethoxysilane (8% by weight) and triethylborane (1 mol/l), and a grafting reaction was performed with air bubbling from the lower portion of the tank. Subsequently, an unreacted trimethoxyvinylsilane and triethylborane as a catalyst were removed by washing with THF and thereafter THF was removed by drying, thereby obtaining a membrane grafted by a hetero atom-containing functional group. Thereafter, an end portion of the resulting microporous membrane was cut, and the resultant was wound up in the form of a mother roll having a width of 1,100 mm and a length of 5,000 m.

<<Examples 16 to 36>>

Each separator for a power storage device was obtained in the same manner as in Example 15 except that conditions were changed as shown in Tables 4 to 6.

<<Comparative Examples 5 and 6>>

Each separator for a power storage device was obtained in the same manner as in Example 15 except that conditions were changed as shown in Table 6.

[Table 4]

Table 4

| | | | | | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|---|
| Micropor-ous mem-brane | Basic physical proper-ties | Thickness | | um | 15 | 35 | 4.5 | 9 | 11 | 11 | 11 | 11 | 11 | 11 |
| | | strength per weight | | gf/-g | 8,500 | 4,600 | 9,500 | 3,500 | 8,800 | 7,600 | 8,100 | 8,500 | 8,500 | 8,700 |
| | | Porosity | | % | 49 | 27 | 38 | 53 | 50 | 51 | 52 | 51 | 51 | 48 |
| | | Air permeability | | sec | 168 | 420 | 130 | 70 | 147 | 138 | 198 | 158 | 177 | 190 |
| | | Chemical species for grafting | | - | Trimethoxysi-lane | Trimethoxysi-lane | Trimethoxysi-lane | Trimethoxysi-lane | Trimethoxysi-lane | Trimethoxysi-lane | Trimethoxysi-lane | Trimethoxysi-lane | Trimethoxysi-lane | Trimethoxysi-lane |
| | Mea-sure ment of spin-spin re-laxation time | Solid echo measur-eme nt at 120°C | Signal intensity at 0.2 msec after start of observation | % | 13.4 | 2.83 | 9.5 | 9.4 | 38 | 39 | 0.21 | 2.5 | 2.6 | 3 |
| | | | Signal intensity at 0.8 msec after start of observation | % | 2.46 | 0.6 | 1.8 | 1.9 | 8 | 0.06 | 0.06 | 0.12 | 0.15 | 0.2 |
| | | CPMG measureme nt at 180°C | Signal intensity at 40 msec after start of observation | % | 20 | 14.3 | 21.6 | 11.3 | 11 | 11.2 | 11.5 | 28.5 | 29.4 | 5.4 |
| | | | Signal intensity at 140 msec after start of observation | % | 9.5 | 6.1 | 11.5 | 4.9 | 5.5 | 5.2 | 6.1 | 19.2 | 1.6 | 1.55 |

(continued)

| | | | Example 15 | Example 16 | Example 17 | Example 18 | Example 19 | Example 20 | Example 21 | Example 22 | Example 23 | Example 24 |
|---|---|---|---|---|---|---|---|---|---|---|---|---|
| | Elastic recovery rate in electrolytic solution | % | 97 | 96 | 95 | 94 | 95 | 94 | 97 | 92 | 93 | 94 |
| Battery performance | Acceptance rate in nailing test after 1000$^{th}$ cycle | % | 91 | 90 | 89 | 92 | 91 | 93 | 90 | 91 | 90 | 92 |

[Table 5]

Table 5

| | | | | | Example 25 | Example 26 | Example 27 | Example 28 | Example 29 | Example 30 | Example 31 |
|---|---|---|---|---|---|---|---|---|---|---|---|
| Microporous membrane | Basic physical properties | Thickness | | um | 12 | 12 | 12.2 | 11 | 10.9 | 11.3 | 11.6 |
| | | strength per weight | | gf/g | 9,600 | 6,600 | 6,500 | 6,900 | 7,300 | 8,800 | 8,100 |
| | | Porosity | | % | 49 | 50 | 51 | 55 | 52 | 46 | 49 |
| | | Air permeability | | sec | 160 | 197 | 185 | 201 | 133 | 192 | 112 |
| | | Chemical species for grafting | | - | Trimethoxysilane | Trimethoxysilane | Trimethoxysilane | Trimethoxysilane | Trimethoxysilane | Trimethoxysilane | Trimethoxysilane |
| | Measurement of spin-spin relaxation time | Solid echo measurement at 120°C | Signal intensity at 0.2 msec after start of observation | % | 36.8 | 39.2 | 0.22 | 9.2 | 17 | 15 | 43.1 |
| | | | Signal intensity at 0.8 msec after start of observation | % | 12.4 | 0.03 | 0.03 | 0.58 | 1.69 | 1.2 | 9.3 |
| | | CPMG measurement at 180°C | Signal intensity at 40 msec after start of observation | % | 13 | 13.5 | 16.5 | 31.8 | 33.8 | 4.2 | 21.2 |
| | | | Signal intensity at 140 msec after start of observation | % | 4.5 | 3.2 | 5.5 | 22.4 | 1.64 | 0.95 | 4.4 |
| | Elastic recovery rate in electrolytic solution | | | % | 72 | 69 | 65 | 61 | 70 | 71 | 63 |
| Battery performance | Acceptance rate in nailing test after 1000$^{th}$ cycle | | | % | 65 | 69 | 69 | 60 | 71 | 68 | 65 |

[Table 6]

Table 6

| | | | | | Example 32 | Example 33 | Example 34 | Example 35 | Example 36 | Comparative Example 5 | Comparative Example 6 |
|---|---|---|---|---|---|---|---|---|---|---|---|
| Microporous membrane | Basic physical properties | Thickness | | um | 13.3 | 12.8 | 12.5 | 10.7 | 11 | 13.1 | 10.3 |
| | | strength per weight | | gf/g | 8,700 | 8,500 | 7,200 | 7,400 | 9,200 | 8,300 | 8,500 |
| | | Porosity | | % | 50 | 51 | 53 | 55 | 57 | 48 | 43 |
| | | Air permeability | | sec | 155 | 172 | 177 | 138 | 183 | 142 | 159 |
| | | Chemical species for grafting | | - | Trimethoxysilane | Trimethoxysilane | Trimethoxysilane | Trimethoxysilane | Trimethoxysilane | Trimethoxysilane | Trimethoxysilane |
| | Measurement of spin-spin relaxation time | Solid echo measurement at 120°C | Signal intensity at 0.2 msec after start of observation | % | 42.8 | 0.16 | 0.8 | 1.1 | 33 | 43 | 0.18 |
| | | | Signal intensity at 0.8 msec after start of observation | % | 0.09 | 0.13 | 0.13 | 0.15 | 0.3 | 13.2 | 0.02 |
| | | CPMG measurement at 180°C | Signal intensity at 40 msec after start of observation | % | 9.8 | 7.8 | 23.1 | 21.4 | 3.9 | 32.2 | 4.3 |
| | | | Signal intensity at 140 msec after start of observation | % | 2.1 | 1.6 | 22 | 1.05 | 2.1 | 24 | 1.22 |
| | Elastic recovery rate in electrolytic solution | | | % | 64 | 71 | 72 | 73 | 65 | 55 | 56 |
| Battery performance | Acceptance rate in nailing test after 1000th cycle | | | % | 61 | 72 | 68 | 77 | 78 | 33 | 54 |

INDUSTRIAL APPLICABILITY

The separator for a power storage device of the present disclosure can be used as, for example, a separator of a power storage device. Examples of the power storage device include a battery and a capacitor, preferably include a lithium ion secondary battery.

REFERENCE SINGS LIST

10 PE polymer higher-order structure of microporous membrane
20 hetero atom-containing functional group
30 crosslinked structure
40 chelate complex structure
50 electrode

## Claims

1. A separator for a power storage device, comprising a microporous membrane comprising polyethylene in an amount of 50 wt.% or more based on the total mass of a resin component(s) constituting the microporous membrane, wherein the separator for a power storage device has a thickness of 2 to 50 μm, a strength per weight of 3,000 N/g (gf/g) to 150,000 N/g (gf/g), an air permeability of 10 sec/100 $cm^3$ to 500 sec/100 $cm^3$, and a porosity of 25% to 90%, and, in an observation of spin-spin relaxation time ($T_2$ relaxation time) of all protons in pulse NMR measurement with a solid echo method at 120°C, a proportion of signal intensity at 0.2 msec after the start of the observation is 0.2% to 40% based on a signal intensity at the start of the observation and a proportion of signal intensity at 0.8 msec after the start of the observation is 0.05% to 10% based on the signal intensity at the start of the observation,

   wherein the polyethylene present in the microporous membrane is grafted by one or more hetero atom-containing functional groups, and
   wherein the one or more hetero atom-containing functional groups are selected from the group consisting of:

      one kind of hetero atom-containing functional group that undergoes a self-condensation reaction;
      a combination of two or more kinds of different hetero atom-containing functional groups that undergo a condensation reaction;
      one or more kinds of hetero atom-containing functional groups that form a chelate complex structure via a metal ion;
      one or more kinds of hetero atom-containing functional groups that form any bond selected from a coordinate bond, an ionic bond, a hydrogen bond and a covalent bond with a compound comprised in other member in a power storage device, the member being in contact with a surface of the microporous membrane; and
      one or more kinds of hetero atom-containing functional groups having a stable structure in stable oxidation or reduction at one or more stages.

2. A separator for a power storage device, comprising a microporous membrane comprising polyethylene in an amount of 50 wt.% or more based on the total mass of a resin component(s) constituting the microporous membrane, wherein the separator for a power storage device has a thickness of 2 to 50 μm, a strength per weight of 3,000 N/g (gf/g) to 150,000 N/g (gf/g), an air permeability of 10 sec/100 $cm^3$ to 500 sec/100 $cm^3$, and a porosity of 25% to 90%, and, in an observation of spin-spin relaxation time ($T_2$ relaxation time) of all protons in pulse NMR measurement with a CPMG method at 180°C, a proportion of signal intensity at 40 msec after the start of the observation is 5% to 30% based on a signal intensity at the start of the observation and a proportion of signal intensity at 140 msec after the start of the observation is 1.5% to 20% based on the signal intensity at the start of the observation,

   wherein the polyethylene present in the microporous membrane is grafted by one or more hetero atom-containing functional groups, and
   wherein the one or more hetero atom-containing functional groups are selected from the group consisting of:

      one kind of hetero atom-containing functional group that undergoes a self-condensation reaction;
      a combination of two or more kinds of different hetero atom-containing functional groups that undergo a

condensation reaction;
one or more kinds of hetero atom-containing functional groups that form a chelate complex structure via a metal ion;
one or more kinds of hetero atom-containing functional groups that form any bond selected from a coordinate bond, an ionic bond, a hydrogen bond and a covalent bond with a compound comprised in other member in a power storage device, the member being in contact with a surface of the microporous membrane; and
one or more kinds of hetero atom-containing functional groups having a stable structure in stable oxidation or reduction at one or more stages.

**3.** The separator for a power storage device according to claim 1 or 2, wherein the one or more hetero atom-containing functional groups have at least one selected from the group consisting of an alkoxysilane group, an alkoxy group, a hydroxyl group, an ester group, a carboxy group, an ether group, and an amine oxide group.

**4.** A method for producing a separator for a power storage device, comprising:

(1) extruding a resin composition comprising polyethylene in an amount of 50 wt.% or more based on the total mass of the resin and a pore-forming material into a sheet by an extruder, followed by cooling and solidifying to form a sheet-like formed body;
(2) stretching the sheet-like formed body to form a stretched sheet;
(3) extracting the pore-forming material from the stretched sheet to form a porous sheet; and
(4) heat-treating the porous sheet, to thereby perform stretching and relaxing in a width direction; wherein

the method further comprises, between steps (1) and (2), between steps (2) and (3), between steps (3) and (4), or after step (4), a step of reacting the polyethylene with one or more graft molecules having a functional group for binding to a molecular chain of the polyethylene and a hetero atom-containing functional group, to thereby graft the polyethylene by the hetero atom-containing functional group,
wherein the resultant separator for a power storage device has, in an observation of spin-spin relaxation time ($T_2$ relaxation time) of all protons in pulse NMR measurement with a solid echo method at 120°C, a proportion of signal intensity at 0.2 msec after the start of the observation is 0.2% to 40% based on a signal intensity at the start of the observation and a proportion of signal intensity at 0.8 msec after the start of the observation is 0.05% to 10% based on the signal intensity at the start of the observation; or the resultant separator for a power storage device has, in an observation of spin-spin relaxation time ($T_2$ relaxation time) of all protons in pulse NMR measurement with a CPMG method at 180°C, a proportion of signal intensity at 40 msec after the start of the observation is 5% to 30% based on a signal intensity at the start of the observation and a proportion of signal intensity at 140 msec after the start of the observation is 1.5% to 20% based on the signal intensity at the start of the observation.

**5.** The method according to claim 4, wherein the functional group for binding to a molecular chain of the polyethylene comprises a vinyl group.

**6.** The method according to claim 4 or 5, wherein the grafting step comprises:

immersing the sheet-like formed body, the stretched sheet or the porous sheet in a solution comprising a solvent, the graft molecule(s), and an alkylborane or alkylborane complex, and
providing oxygen into the solution to react the graft molecule(s) with the polyethylene, thereby grafting the polyethylene by the hetero atom-containing functional group.

**7.** The method according to claim 6, further comprising, after the grafting, extracting the graft molecule(s) and the alkylborane or alkylborane complex from the sheet-like formed body, the stretched sheet or the porous sheet, and drying the resultant.

**8.** The method according to any one of claims 4 to 7, wherein the grafting step is performed after step (4).

**9.** The method according to any one of claims 4 to 7, wherein the grafting step is performed between steps (1) and (2).

**10.** The method according to any one of claims 4 to 7, wherein the grafting step is performed between steps (2) and (3).

**11.** A power storage device comprising a positive electrode, a negative electrode, and the separator for a power storage

device according to any one of claims 1 to 3, between the positive electrode and the negative electrode.

**Patentansprüche**

1. Separator für eine Stromspeichervorrichtung, umfassend eine mikroporöse Membran, die Polyethylen in einer Menge von 50 Gew.-% oder mehr umfasst, bezogen auf die Gesamtmasse eines oder mehrerer Harzkomponenten, die die mikroporöse Membran bilden, wobei der Separator für eine Stromspeichervorrichtung eine Dicke von 2 bis 50 μm, eine Festigkeit pro Gewicht von 3000 N/g (Pond/g) bis 150000 N/g (Pond/g), eine Luftdurchlässigkeit von 10 s/100 $cm^3$ bis 500 s/100 $cm^3$ und eine Porosität von 25% bis 90% aufweist und in einer Beobachtung der Spin-Spin-Relaxationszeit ($T_2$-Relaxationszeit) aller Protonen in einer Puls-NMR-Messung mit einer Festkörper-Echo-Methode bei 120°C ein Anteil der Signalintensität 0,2 ms nach Beginn der Beobachtung 0,2% bis 40% beträgt, bezogen auf die Signalintensität zu Beginn der Beobachtung, und ein Anteil der Signalintensität 0,8 ms nach Beginn der Beobachtung 0,05% bis 10% beträgt, bezogen auf die Signalintensität zu Beginn der Beobachtung,

   wobei das in der mikroporösen Membran vorhandene Polyethylen mit einer oder mehreren heteroatomhaltigen funktionellen Gruppen gepfropft ist und
   wobei die eine oder die mehreren heteroatomhaltigen funktionellen Gruppen aus der Gruppe ausgewählt sind, die aus Folgenden besteht:

      einer Art heteroatomhaltiger funktioneller Gruppe, die eine Selbstkondensationsreaktion erfährt;
      einer Kombination aus zwei oder mehr Arten von verschiedenen heteroatomhaltigen funktionellen Gruppen, die eine Kondensationsreaktion erfahren;
      einer oder mehreren Arten von heteroatomhaltigen funktionellen Gruppen, die über ein Metallion eine Chelatkomplexstruktur bilden;
      einer oder mehreren Arten von heteroatomhaltigen funktionellen Gruppen, die mit einer Verbindung, die in einem anderen Element in einer Stromspeichervorrichtung enthalten ist, eine Bindung bilden, die aus einer koordinativen Bindung, einer ionischen Bindung, einer Wasserstoffbrückenbindung und einer kovalenten Bindung ausgewählt ist, wobei das Element mit einer Fläche der mikroporösen Membran in Kontakt steht; und
      einer oder mehreren Arten von heteroatomhaltigen funktionellen Gruppen, die bei einer stabilen Oxidation oder Reduktion in einer oder mehreren Stufen eine stabile Struktur aufweisen.

2. Separator für eine Stromspeichervorrichtung, umfassend eine mikroporöse Membran, die Polyethylen in einer Menge von 50 Gew.-% oder mehr umfasst, bezogen auf die Gesamtmasse eines oder mehrerer Harzkomponenten, die die mikroporöse Membran bilden, wobei der Separator für eine Stromspeichervorrichtung eine Dicke von 2 bis 50 μm, eine Festigkeit pro Gewicht von 3000 N/g (Pond/g) bis 150000 N/g (Pond/g), eine Luftdurchlässigkeit von 10 s/100 $cm^3$ bis 500 s/100 $cm^3$ und eine Porosität von 25% bis 90% aufweist und in einer Beobachtung der Spin-Spin-Relaxationszeit ($T_2$-Relaxationszeit) aller Protonen in einer Puls-NMR-Messung mit einer CPMG-Methode bei 180°C ein Anteil der Signalintensität 40 ms nach Beginn der Beobachtung 5% bis 30% beträgt, bezogen auf die Signalintensität zu Beginn der Beobachtung, und ein Anteil der Signalintensität 140 ms nach Beginn der Beobachtung 1,5% bis 20% beträgt, bezogen auf die Signalintensität zu Beginn der Beobachtung,

   wobei das in der mikroporösen Membran vorhandene Polyethylen mit einer oder mehreren heteroatomhaltigen funktionellen Gruppen gepfropft ist und
   wobei die eine oder die mehreren heteroatomhaltigen funktionellen Gruppen aus der Gruppe ausgewählt sind, die aus Folgenden besteht:

      einer Art heteroatomhaltiger funktioneller Gruppe, die eine Selbstkondensationsreaktion erfährt;
      einer Kombination aus zwei oder mehr Arten von verschiedenen heteroatomhaltigen funktionellen Gruppen, die eine Kondensationsreaktion erfahren;
      einer oder mehreren Arten von heteroatomhaltigen funktionellen Gruppen, die über ein Metallion eine Chelatkomplexstruktur bilden;
      einer oder mehreren Arten von heteroatomhaltigen funktionellen Gruppen, die mit einer Verbindung, die in einem anderen Element in einer Stromspeichervorrichtung enthalten ist, eine Bindung bilden, die aus einer koordinativen Bindung, einer ionischen Bindung, einer Wasserstoffbrückenbindung und einer kovalenten Bindung ausgewählt ist, wobei das Element mit einer Fläche der mikroporösen Membran in Kontakt steht; und

einer oder mehreren Arten von heteroatomhaltigen funktionellen Gruppen, die bei einer stabilen Oxidation oder Reduktion in einer oder mehreren Stufen eine stabile Struktur aufweisen.

**3.** Separator für eine Stromspeichervorrichtung gemäß Anspruch 1 oder 2, wobei die eine oder die mehreren heteroatomhaltigen funktionellen Gruppen wenigstens eine aufweisen, die aus der Gruppe ausgewählt ist, die aus einer Alkoxysilangruppe, einer Alkoxygruppe, einer Hydroxygruppe, einer Estergruppe, einer Carboxygruppe, einer Ethergruppe und einer Aminoxidgruppe besteht.

**4.** Verfahren zur Herstellung eines Separators für eine Stromspeichervorrichtung, umfassend:

(1) das Extrudieren einer Harzzusammensetzung, die Polyethylen in einer Menge von 50 Gew.-% oder mehr, bezogen auf die Gesamtmasse des Harzes, und ein porenbildendes Material umfasst, zu einer Folie mittels eines Extruders, danach das Abkühlen und Verfestigen unter Bildung eines folienartigen Formkörpers;
(2) das Strecken des folienartigen Formkörpers unter Bildung einer gestreckten Folie;
(3) das Extrahieren des porenbildenden Materials aus der gestreckten Folie unter Bildung einer porösen Folie; und
(4) das Wärmebehandeln der porösen Folie, um dadurch ein Strecken und Relaxieren in einer Querrichtung durchzuführen; wobei

das Verfahren zwischen den Schritten (1) und (2), zwischen den Schritten (2) und (3), zwischen den Schritten (3) und (4) oder nach Schritt (4) weiterhin einen Schritt umfasst, bei dem das Polyethylen mit einem oder mehreren Pfropfmolekülen umgesetzt wird, die eine funktionelle Gruppe zum Binden an eine Molekülkette des Polyethylens und eine heteroatomhaltige funktionelle Gruppe aufweisen, um dadurch das Polyethylen mit der heteroatomhaltigen funktionellen Gruppe zu pfropfen,
wobei der resultierende Separator für eine Stromspeichervorrichtung in einer Beobachtung der Spin-Spin-Relaxationszeit ($T_2$-Relaxationszeit) aller Protonen in einer Puls-NMR-Messung mit einer Festkörper-Echo-Methode bei 120°C einen Anteil der Signalintensität 0,2 ms nach Beginn der Beobachtung von 0,2% bis 40% aufweist, bezogen auf die Signalintensität zu Beginn der Beobachtung, und einen Anteil der Signalintensität 0,8 ms nach Beginn der Beobachtung von 0,05% bis 10% aufweist, bezogen auf die Signalintensität zu Beginn der Beobachtung; oder der resultierende Separator für eine Stromspeichervorrichtung in einer Beobachtung der Spin-Spin-Relaxationszeit ($T_2$-Relaxationszeit) aller Protonen in einer Puls-NMR-Messung mit einer CPMG-Methode bei 180°C einen Anteil der Signalintensität 40 ms nach Beginn der Beobachtung von 5% bis 30% aufweist, bezogen auf die Signalintensität zu Beginn der Beobachtung, und einen Anteil der Signalintensität 140 ms nach Beginn der Beobachtung von 1,5% bis 20% aufweist, bezogen auf die Signalintensität zu Beginn der Beobachtung.

**5.** Verfahren gemäß Anspruch 4, wobei die funktionelle Gruppe zum Binden an eine Molekülkette des Polyethylens eine Vinylgruppe umfasst.

**6.** Verfahren gemäß Anspruch 4 oder 5, wobei der Pfropfschritt Folgendes umfasst:

das Eintauchen des folienartigen Formkörpers, der gestreckten Folie oder der porösen Folie in eine Lösung, die ein Lösungsmittel, das oder die Pfropfmoleküle und ein Alkylboran oder einen Alkylborankomplex umfasst, und das Einleiten von Sauerstoff in die Lösung, damit das oder die Pfropfmoleküle mit dem Polyethylen reagieren, wodurch das Polyethylen mit der heteroatomhaltigen funktionellen Gruppe gepfropft wird.

**7.** Verfahren gemäß Anspruch 6, weiterhin umfassend nach dem Pfropfen das Extrahieren des oder der Pfropfmoleküle und des Alkylborans oder des Alkylborankomplexes aus dem folienartigen Formkörper, der gestreckten Folie oder der porösen Folie und das Trocknen der erhaltenen Membran.

**8.** Verfahren gemäß einem der Ansprüche 4 bis 7, wobei der Pfropfschritt nach Schritt (4) durchgeführt wird.

**9.** Verfahren gemäß einem der Ansprüche 4 bis 7, wobei der Pfropfschritt zwischen den Schritten (1) und (2) durchgeführt wird.

**10.** Verfahren gemäß einem der Ansprüche 4 bis 7, wobei der Pfropfschritt zwischen den Schritten (2) und (3) durchgeführt wird.

11. Stromspeichervorrichtung, umfassend eine positive Elektrode, eine negative Elektrode und zwischen der positiven Elektrode und der negativen Elektrode den Separator für eine Stromspeichervorrichtung gemäß einem der Ansprüche 1 bis 3.

## Revendications

1. Séparateur pour un dispositif de stockage d'énergie, comprenant une membrane microporeuse comprenant du polyéthylène en une quantité de 50 % en poids ou plus sur la base de la masse totale d'un ou de composant(s) de résine constituant la membrane microporeuse, dans lequel le séparateur pour un dispositif de stockage d'énergie présente une épaisseur de 2 à 50 μm, une résistance par unité de masse de 3000 N/g (gf/g) à 150 000 N/g (gf/g), une perméabilité à l'air de 10 s/100 $cm^3$ à 500 s/100 $cm^3$, et une porosité de 25 % à 90 %, et, lors d'une observation du temps de relaxation transversale (temps de relaxation $T_2$) de l'ensemble des protons dans une mesure de RMN pulsée avec une méthode à écho solide à 120 °C, une proportion de l'intensité du signal à 0,2 msec après le début de l'observation est de 0,2 % à 40 % sur la base d'une intensité du signal au début de l'observation et une proportion de l'intensité du signal à 0,8 msec après le début de l'observation est de 0,05 % à 10 % sur la base de l'intensité du signal au début de l'observation,

   dans lequel le polyéthylène présent dans la membrane microporeuse est greffé par un ou plusieurs groupes fonctionnels contenant un hétéroatome, et
   dans lequel les un ou plusieurs groupes fonctionnels contenant un hétéroatome sont sélectionnés dans le groupe consistant en :

      un type de groupe fonctionnel contenant un hétéroatome qui subit une réaction d'autocondensation ;
      une combinaison de deux types ou plus de groupes fonctionnels contenant un hétéroatome différents qui subissent une réaction de condensation ;
      un ou plusieurs types de groupes fonctionnels contenant un hétéroatome qui forment une structure de complexe chélaté via un ion métallique ;
      un ou plusieurs types de groupes fonctionnels contenant un hétéroatome qui forment toute liaison sélectionnée parmi une liaison de coordination, une liaison ionique, une liaison hydrogène et une liaison covalente avec un composé compris dans un autre organe dans un dispositif de stockage d'énergie, l'organe étant en contact avec une surface de la membrane microporeuse ; et
      un ou plusieurs types de groupes fonctionnels contenant un hétéroatome présentant une structure stable en oxydation ou réduction stable à un ou plusieurs stades.

2. Séparateur pour un dispositif de stockage d'énergie, comprenant une membrane microporeuse comprenant du polyéthylène en une quantité de 50 % en poids ou plus sur la base de la masse totale d'un ou de composant(s) de résine constituant la membrane microporeuse, dans lequel le séparateur pour un dispositif de stockage d'énergie présente une épaisseur de 2 à 50 μm, une résistance par unité de masse de 3000 N/g (gf/g) à 150 000 N/g (gf/g), une perméabilité à l'air de 10 s/100 $cm^3$ à 500 s/100 $cm^3$, et une porosité de 25 % à 90 %, et, lors d'une observation du temps de relaxation transversale (temps de relaxation $T_2$) de l'ensemble des protons dans une mesure de RMN pulsée avec une méthode CPMG à 180 °C, une proportion de l'intensité du signal à 40 msec après le début de l'observation est de 5 % à 30 % sur la base de l'intensité du signal au début de l'observation et une proportion de l'intensité du signal à 140 msec après le début de l'observation est de 1,5 % à 20 % sur la base de l'intensité du signal au début de l'observation,

   dans lequel le polyéthylène présent dans la membrane microporeuse est greffé par un ou plusieurs groupes fonctionnels contenant un hétéroatome, et
   dans lequel les un ou plusieurs groupes fonctionnels contenant un hétéroatome sont sélectionnés dans le groupe consistant en :

      un type de groupe fonctionnel contenant un hétéroatome qui subit une réaction d'autocondensation ;
      une combinaison de deux types ou plus de groupes fonctionnels contenant un hétéroatome différents qui subissent une réaction de condensation ;
      un ou plusieurs types de groupes fonctionnels contenant un hétéroatome qui forment une structure de complexe chélaté via un ion métallique ;
      un ou plusieurs types de groupes fonctionnels contenant un hétéroatome qui forment toute liaison sélectionnée parmi une liaison de coordination, une liaison ionique, une liaison hydrogène et une liaison covalente

avec un composé compris dans un autre organe dans un dispositif de stockage d'énergie, l'organe étant en contact avec une surface de la membrane microporeuse ; et
un ou plusieurs types de groupes fonctionnels contenant un hétéroatome présentant une structure stable en oxydation ou réduction stable à un ou plusieurs stades.

**3.** Séparateur pour un dispositif de stockage d'énergie selon la revendication 1 ou la revendication 2, dans lequel les un ou plusieurs groupes fonctionnels contenant un hétéroatome présentent au moins un groupe sélectionné dans le groupe consistant en un groupe alkoxysilane, un groupe alcoxy, un groupe hydroxyle, un groupe ester, un groupe carboxyle, un groupe éther, et un groupe oxyde d'amine.

**4.** Procédé pour produire un séparateur pour un dispositif de stockage d'énergie, comprenant :

(1) l'extrusion d'une composition de résine comprenant du polyéthylène en une quantité de 50 % en poids ou plus sur la base de la masse totale de la résine et un matériau de formation de pores en une feuille au moyen d'une extrudeuse, suivi d'un refroidissement et d'une solidification pour former un corps mis en forme en feuille ;
(2) l'étirement du corps mis en forme en feuille pour former une feuille étirée ;
(3) l'extraction du matériau de formation de pores de la feuille étirée pour former une feuille poreuse ; et
(4) le traitement thermique de la feuille poreuse, de manière à effectuer l'étirement et la relaxation dans la direction de la largeur ; dans lequel

le procédé comprend en outre, entre les étapes (1) et (2), entre les étapes (2) et (3), entre les étapes (3) et (4), ou après l'étape (4), une étape de mise en réaction du polyéthylène avec une ou plusieurs molécule(s) de greffage présentant un groupe fonctionnel destiné à se lier à une chaîne moléculaire du polyéthylène et un groupe fonctionnel contenant un hétéroatome, de manière à greffer le polyéthylène au moyen du groupe fonctionnel contenant un hétéroatome,
dans lequel le séparateur résultant pour un dispositif de stockage d'énergie obtenu présente, lors d'une observation du temps de relaxation transversale (temps de relaxation $T_2$) de l'ensemble des protons dans une mesure de RMN pulsée avec une méthode à écho solide à 120 °C, une proportion de l'intensité du signal à 0,2 msec après le début de l'observation est de 0,2 % à 40 % sur la base de l'intensité du signal au début de l'observation et une proportion de l'intensité du signal à 0,8 msec après le début de l'observation est de 0,05 % à 10 % sur la base de l'intensité du signal au début de l'observation ;

ou le séparateur résultant pour un dispositif de stockage d'énergie obtenu présente, lors d'une observation du temps de relaxation transversale (temps de relaxation $T_2$) de l'ensemble des protons dans une mesure de RMN pulsée avec une méthode CPMG à 180 °C, une proportion de l'intensité du signal à 40 msec après le début de l'observation est de 5 % à 30 % sur la base de l'intensité du signal au début de l'observation et une proportion de l'intensité du signal à 140 msec après le début de l'observation est de 1,5 % à 20 % sur la base de l'intensité du signal au début de l'observation.

**5.** Procédé selon la revendication 4, dans lequel le groupe fonctionnel destiné à se lier à une chaîne moléculaire du polyéthylène comprend un groupe vinyle.

**6.** Procédé selon la revendication 4 or la revendication 5, dans lequel l'étape de greffage comprend :

l'immersion du corps mis en forme en feuille, de la feuille étirée ou de la feuille poreuse dans une solution comprenant un solvant, la ou les molécule(s) de greffage, et un alkylborane ou un complexe d'alkylborane, et l'amenée d'oxygène dans la solution afin de mettre en réaction la ou les molécule(s) de greffage avec le polyéthylène, de manière à greffer le polyéthylène au moyen du groupe fonctionnel contenant un hétéroatome.

**7.** Procédé selon la revendication 6, comprenant en outre, après le greffage, l'extraction de la ou des molécule(s) de greffage et de l'alkylborane ou du complexe d'alkylborane du corps mis en forme en feuille, de la feuille étirée ou de la feuille poreuse, et le séchage du produit obtenu.

**8.** Procédé selon l'une quelconque des revendications 4 à 7, dans lequel l'étape de greffage est effectuée après l'étape (4).

**9.** Procédé selon l'une quelconque des revendications 4 à 7, dans lequel l'étape de greffage est effectuée entre les étapes (1) et (2).

**10.** Procédé selon l'une quelconque des revendications 4 à 7, dans lequel l'étape de greffage est effectuée entre les étapes (2) et (3).

**11.** Dispositif de stockage d'énergie comprenant une électrode positive, une électrode négative, et le séparateur pour un dispositif de stockage d'énergie selon l'une quelconque des revendications 1 à 3, entre l'électrode positive et l'électrode négative.

FIG. 1

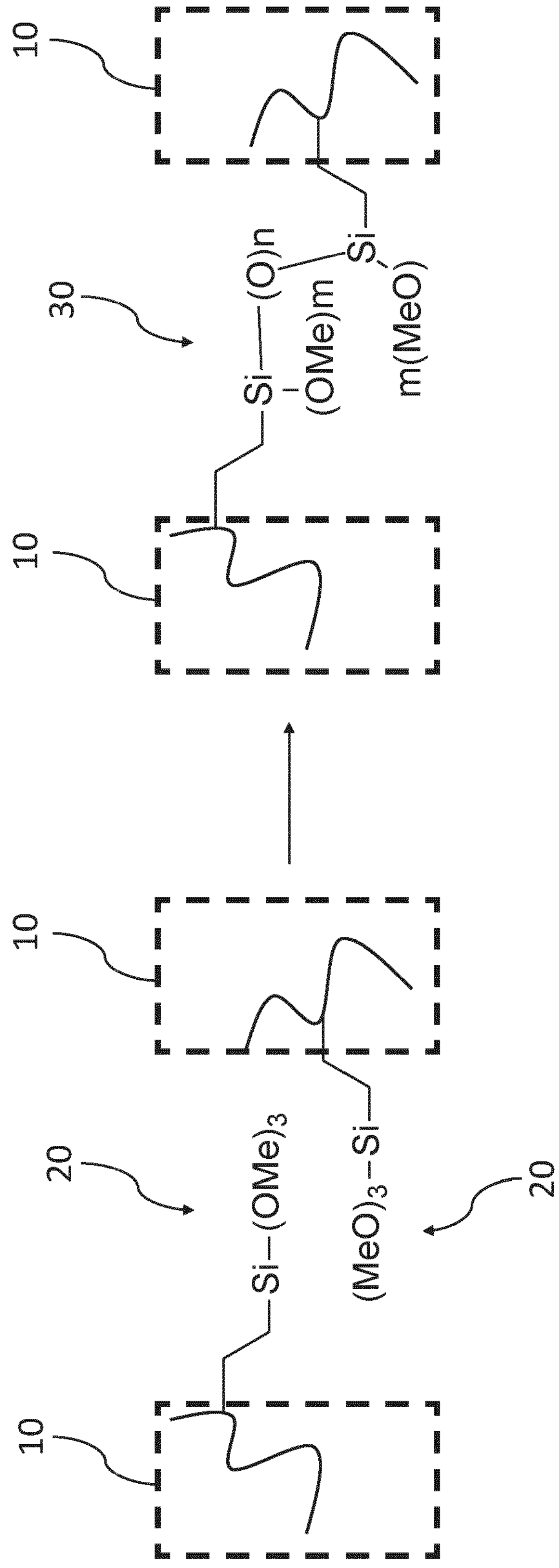

FIG. 2

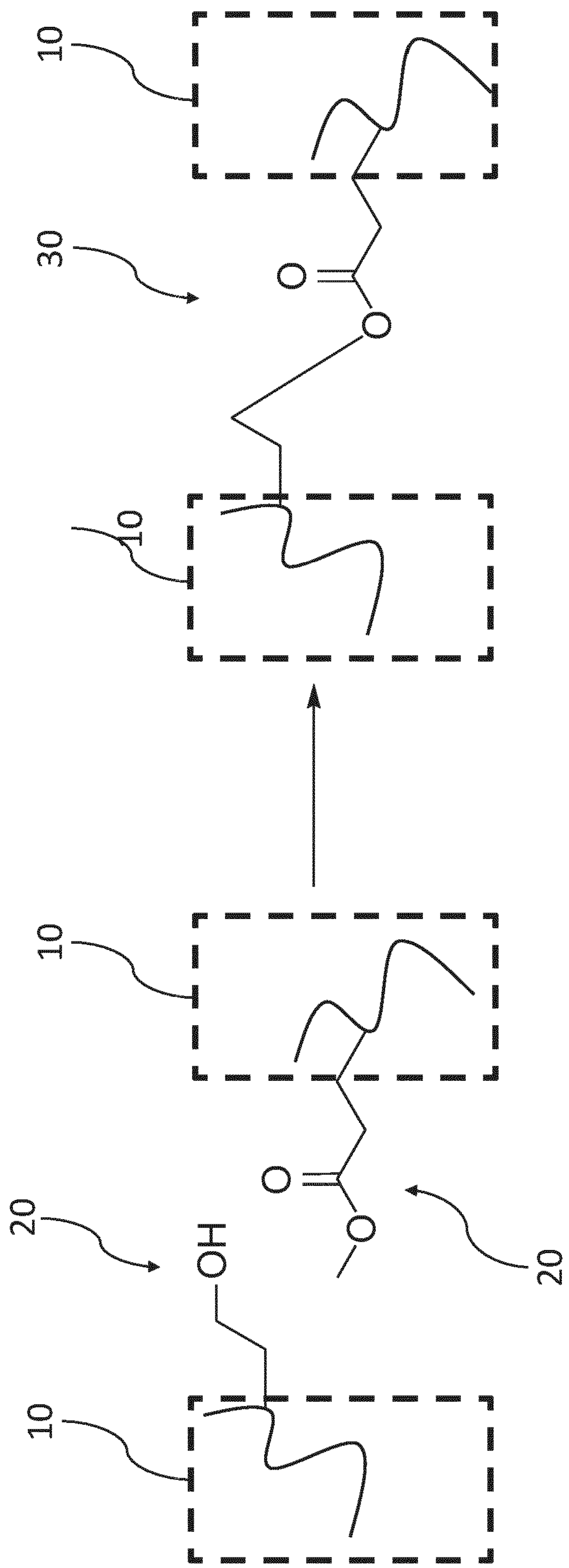

FIG. 3

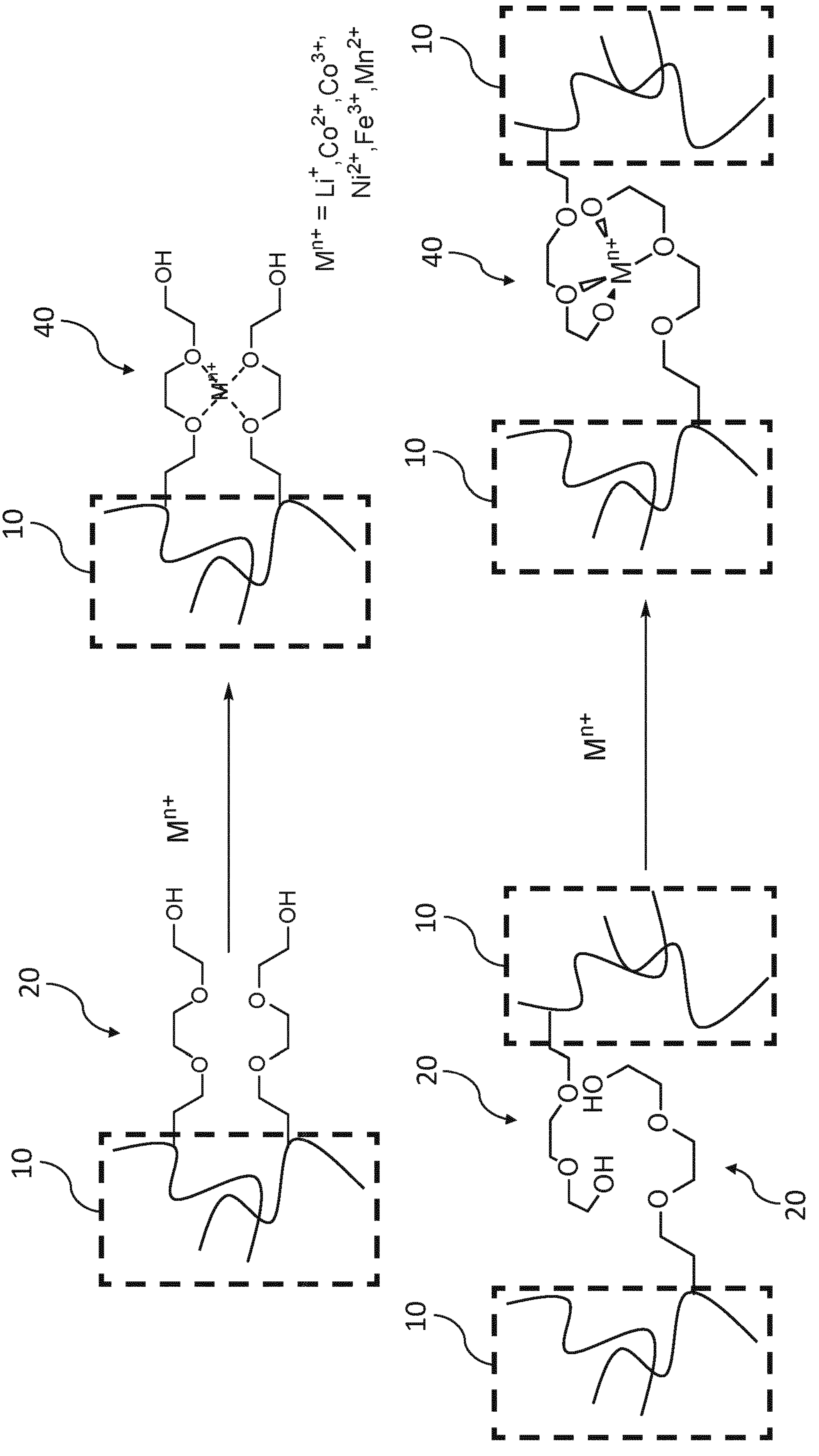

FIG. 4

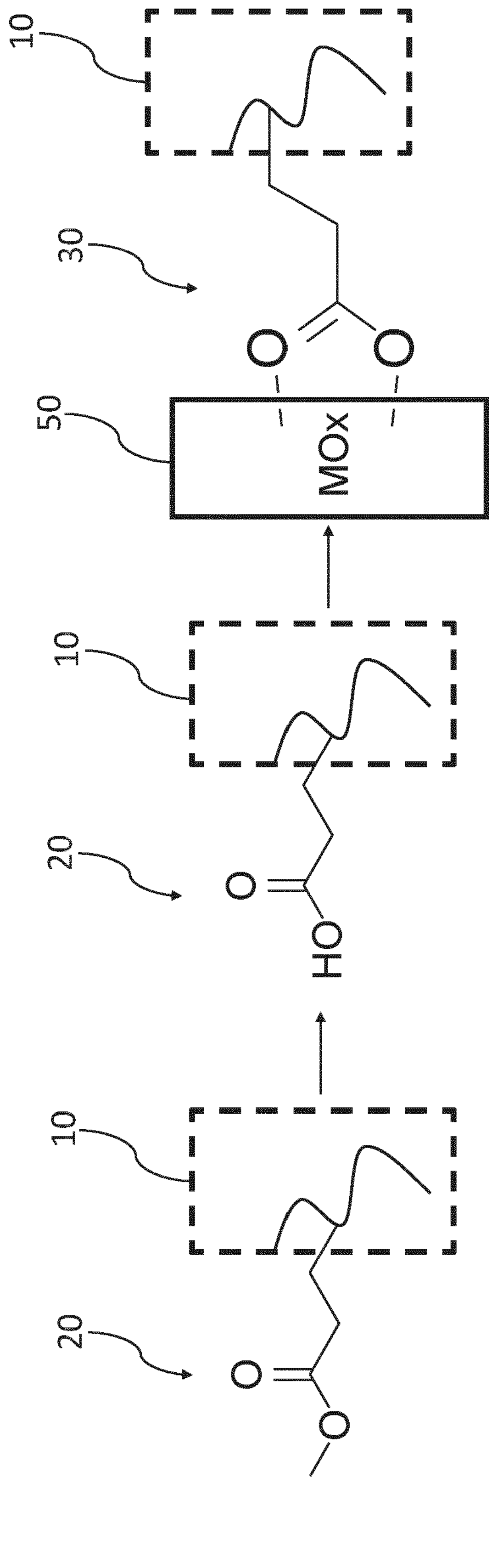

FIG. 5

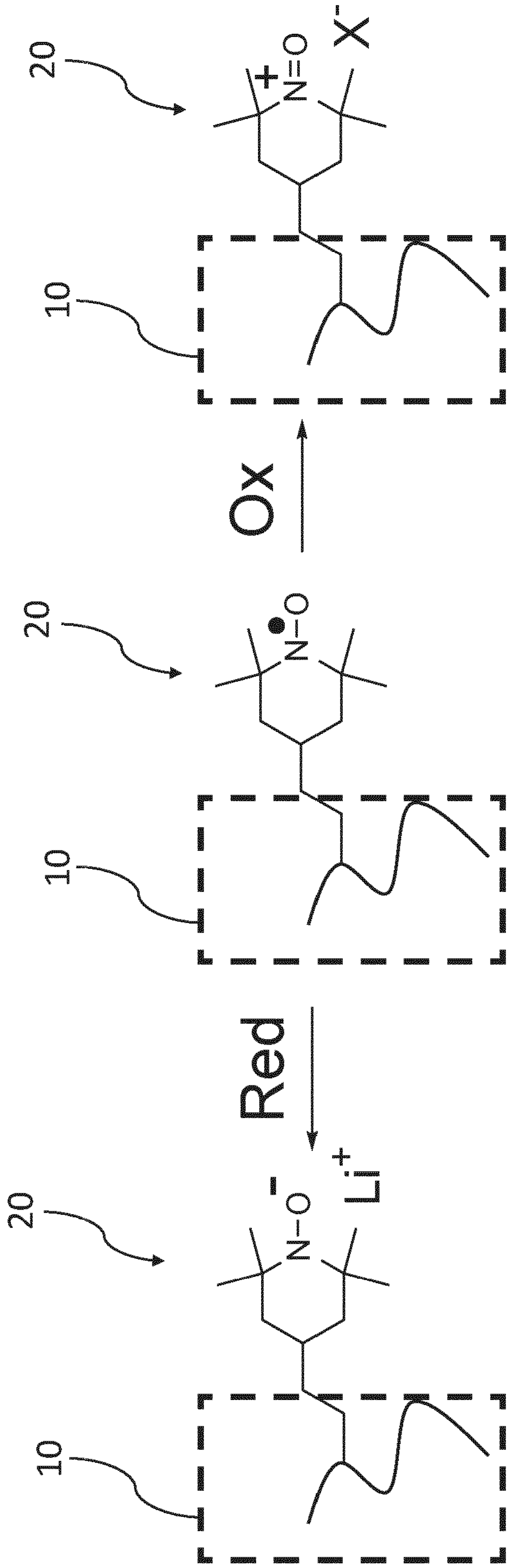

FIG. 6

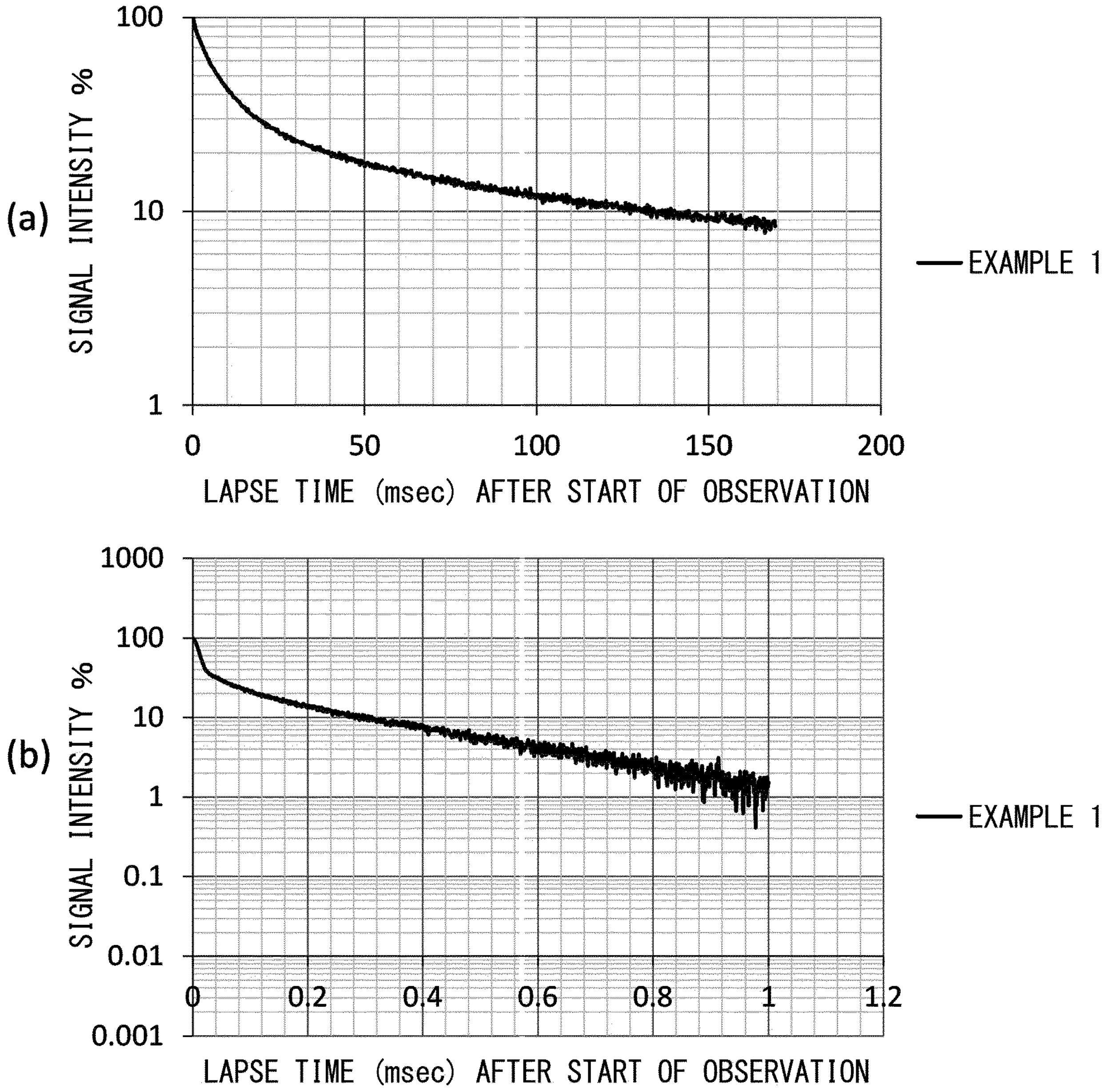
(a)
SIGNAL INTENSITY %
100
10
1
0
50
100
150
200
LAPSE TIME (msec) AFTER START OF OBSERVATION
EXAMPLE 1
(b)
SIGNAL INTENSITY %
1000
100
10
1
0.1
0.01
0.001
0
0.2
0.4
0.6
0.8
1
1.2
LAPSE TIME (msec) AFTER START OF OBSERVATION
EXAMPLE 1

FIG. 7

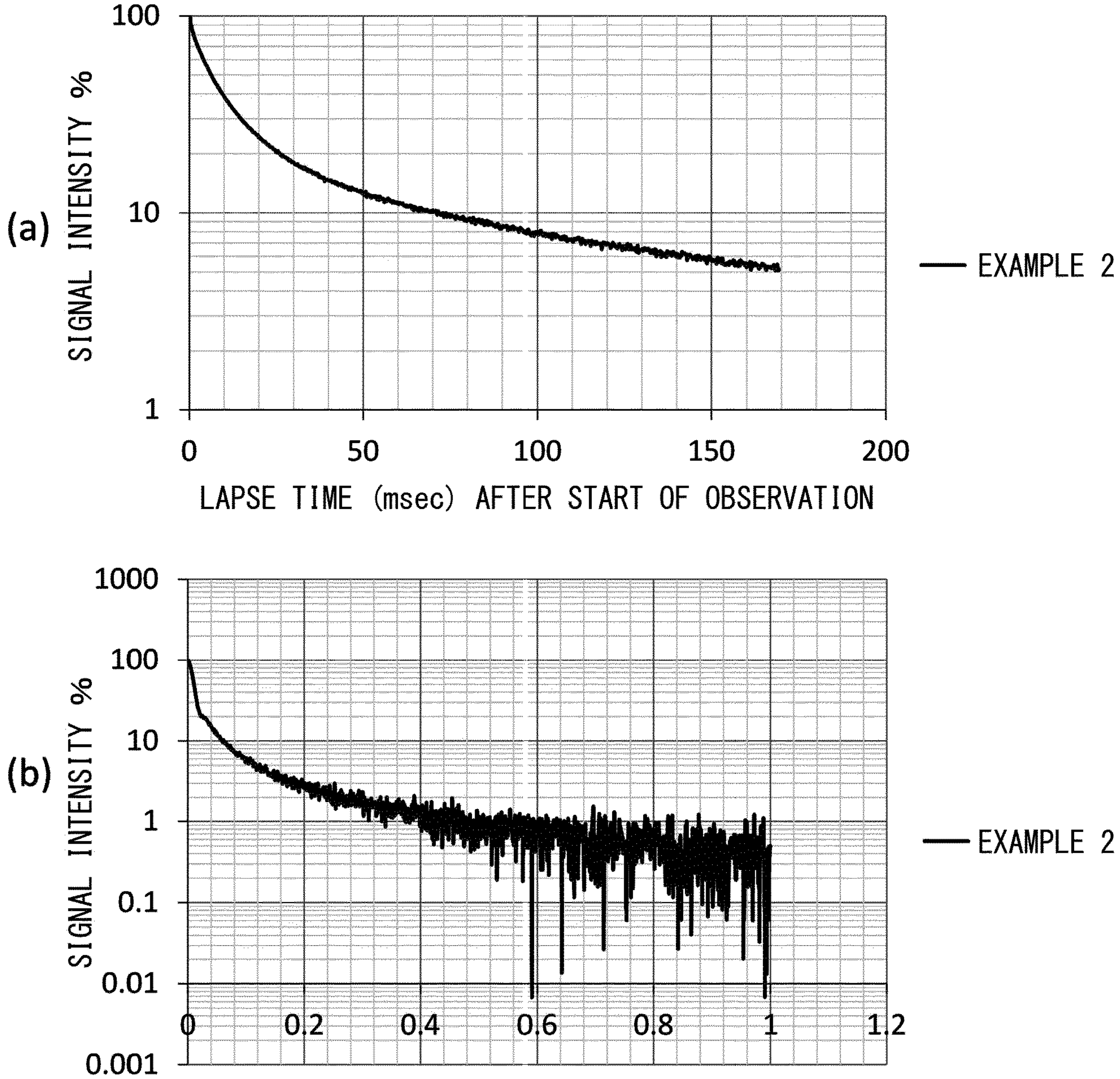
(a)
100
10
1
SIGNAL INTENSITY %
0
50
100
150
200
LAPSE TIME (msec) AFTER START OF OBSERVATION
EXAMPLE 2
(b)
1000
100
10
1
0.1
0.01
0.001
SIGNAL INTENSITY %
0
0.2
0.4
0.6
0.8
1
1.2
LAPSE TIME (msec) AFTER START OF OBSERVATION
EXAMPLE 2

FIG. 8

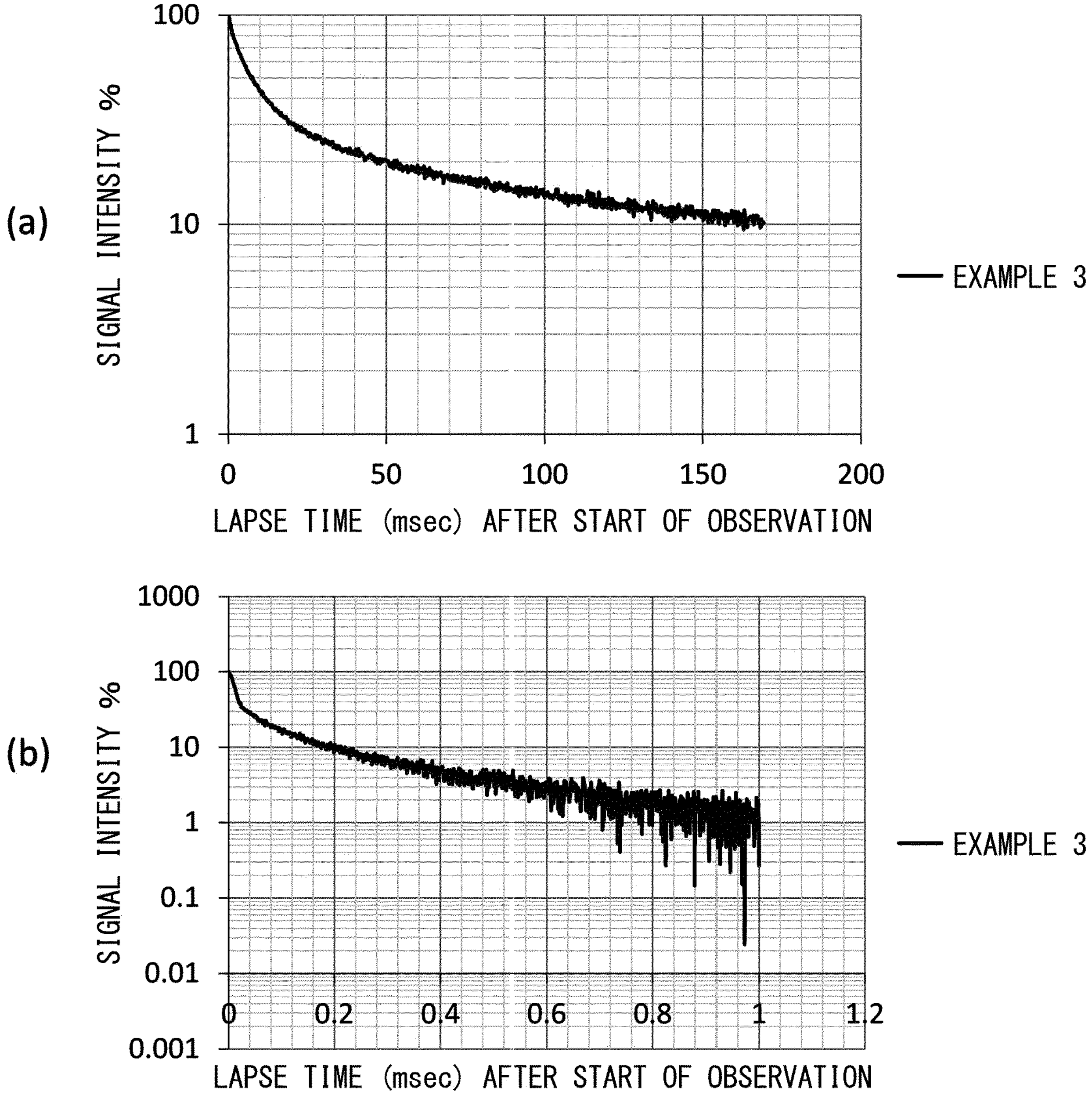
(a)
100
10
1
SIGNAL INTENSITY %
0
50
100
150
200
LAPSE TIME (msec) AFTER START OF OBSERVATION
EXAMPLE 3
(b)
1000
100
10
1
0.1
0.01
0.001
SIGNAL INTENSITY %
0
0.2
0.4
0.6
0.8
1
1.2
LAPSE TIME (msec) AFTER START OF OBSERVATION
EXAMPLE 3

FIG. 9

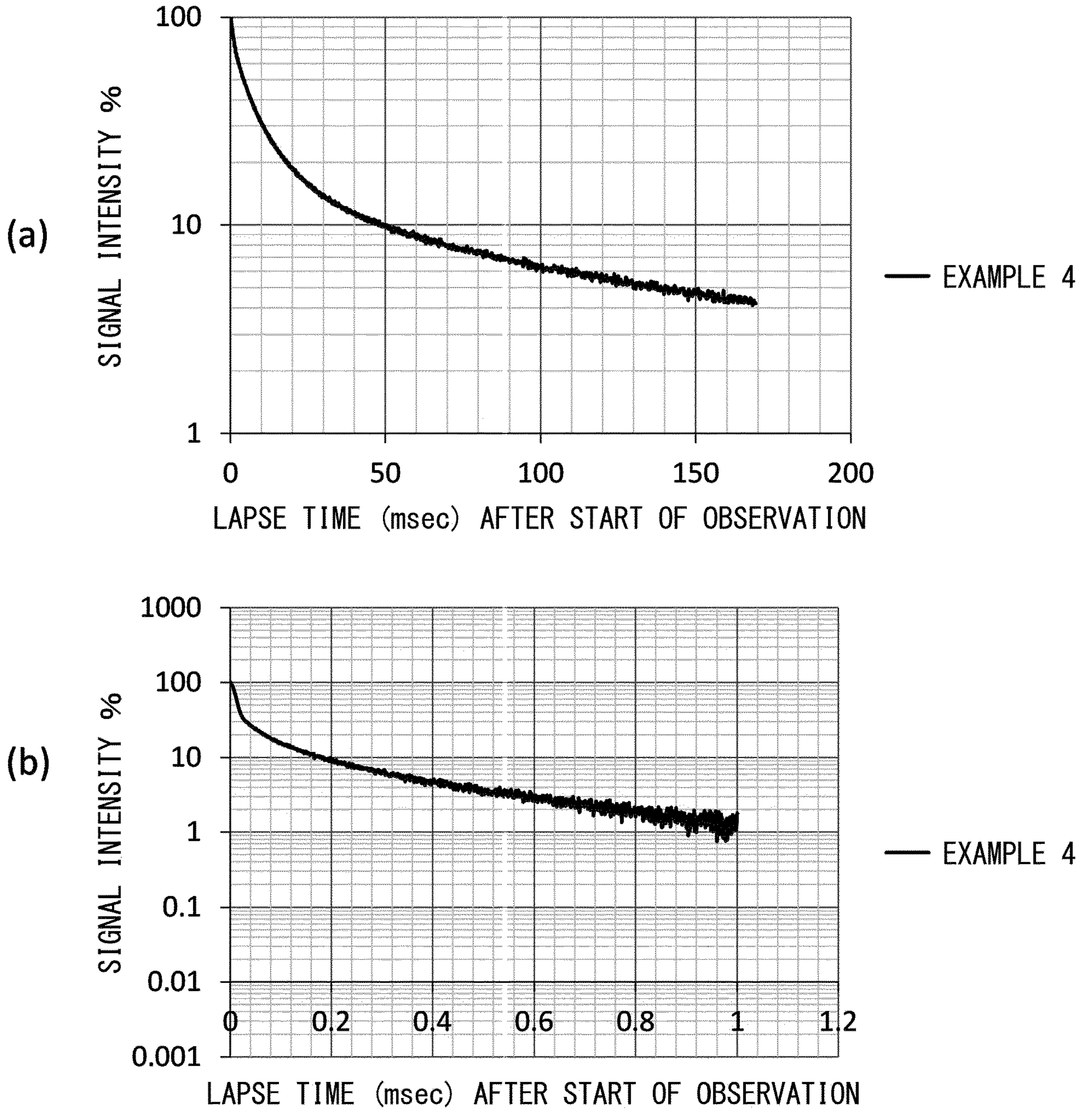
(a)
100
10
1
SIGNAL INTENSITY %
0
50
100
150
200
LAPSE TIME (msec) AFTER START OF OBSERVATION
EXAMPLE 4
(b)
1000
100
10
1
0.1
0.01
0.001
SIGNAL INTENSITY %
0
0.2
0.4
0.6
0.8
1
1.2
LAPSE TIME (msec) AFTER START OF OBSERVATION
EXAMPLE 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017084779 A
- JP 2007523248 W
- EP 3113245 A1


### Non-patent literature cited in the description


- **CHANGZHEN MAN**. Enhanced wetting properties of a polypropylene separator for a lithium-ion battery by hyperthermal hydrogen induced cross-linking of poly(ethylene oxide). *J. Mater. Chem. A*, 2014, vol. 2, 11980-11986
- **MARK F. SONNENSCHEIN**. Physical and Chemical Probes of the Bond Strength between Trialkylboranes and Amines and Their Utility as Stabilized Free Radical Polymerization Catalysts. *Macromolecules*, 2006, vol. 39, 2507-2513
- **MARK F. SONNENSCHEIN**. Mechanism of Trialkylborane Promoted Adhesion to Low Surface Energy Plastics. *Macromolecules*, 2004, vol. 37, 7974-7978
- **VINCENT J. MCBRIERTY**. NMR Solid Polymers (Cambridge Solid State Science Series). Cambridge University Press, 21 August 2008
- **P.J. HORE**. Introduction to NMR: Essential Tool Primer (Chemistry Primer Series). Kagaku Dojin, 22 March 2017
- **HIDEO AKUTSU** ; **ICHIO SHIMADA** ; **EIICHIRO SUZUKI** ; **YOSHIFUMI NISHIMURA**. NMR Spectroscopy (Spectroscopy Series). Kodansha Ltd., 23 April 2016